# EUROPEAN PATENT APPLICATION

(11) **EP 4 668 344 A1**
(43) Date of publication of application: **24.12.2025**
(21) Application number: 23937022.4
(22) Date of filing: 17.05.2023
(51) Int. Cl.: H01M 4/00

(54) **POSITIVE ELECTRODE ACTIVE MATERIAL AND METHOD FOR PREPARING SAME, AND POSITIVE ELECTRODE SHEET, BATTERY AND ELECTRIC DEVICE COMPRISING SAME**

(71) Applicant: Contemporary Amperex Technology Co., Limited, Ningde, Fujian 352100 (CN)
(72) Inventor: LI, Qiang, Ningde, Fujian 352100 (CN); LIN, Wenguang, Ningde, Fujian 352100 (CN); WANG, Yuhao, Ningde, Fujian 352100 (CN); LIANG, Zibin, Ningde, Fujian 352100 (CN); ZHANG, Xinxin, Ningde, Fujian 352100 (CN)
(74) Representative: Kraus & Lederer PartGmbB
(86) International application number: PCT/CN2023/094848
(87) International publication number: WO 2024/234339

(57) **Abstract**

This application provides a positive electrode active material, a preparation method thereof, and a positive electrode plate, a battery, and an electric apparatus including the same. The positive electrode active material includes a layered transition metal oxide represented by Formula (I), with parameters as defined herein. The positive electrode active material includes a K element, and an amount of the K element decreases from a particle surface to a particle interior of the positive electrode active material.

NaₓK_{y}MₐA_{b}B_{c}OₘQₙ Formula (I)

## Description

### TECHNICAL FIELD

This application relates to a positive electrode active material, a preparation method thereof, and a positive electrode plate, a battery, and an electric apparatus including the same.

### BACKGROUND

In recent years, batteries have been widely used in energy storage power supply systems such as hydroelectric, thermal, wind, and solar power plants, and many other fields including electric tools, electric bicycles, electric motorcycles, electric vehicles, military equipment, and aerospace. Currently, lithium-ion batteries still hold a central position in the battery industry, but the lithium-ion batteries also face significant challenges, such as the increasing scarcity of lithium resources. Sodium resources are far more abundant, more widely distributed, and significantly less costly than lithium resources. Therefore, sodium-ion batteries have emerged as a promising next-generation electrochemical system to replace lithium-ion batteries. A positive electrode active material is a key factor affecting the performance of a sodium-ion battery. Due to limitations in preparation processes, a high amount of a free alkaline substance is typically present on the surface of the positive electrode active material, which can adversely affect the performance of the sodium-ion battery. Consequently, an effective technical means is needed to enhance the performance of the positive electrode active material. The above statements are provided solely to offer background information related to this application and do not necessarily constitute prior art.

### SUMMARY

This application provides a positive electrode active material, a preparation method thereof, and a positive electrode plate, a battery, and an electric apparatus including the same, which can stabilize a crystal structure of the positive electrode active material and enable the positive electrode active material to have good cycling performance and rate performance.

A first aspect of this application provides a positive electrode active material including a layered transition metal oxide represented by Formula (I):

NaₓK_{y}MₐA_{b}B_{c}OₘQₙ Formula (I),

where x > 0.5, 0 < y < 0.5, 0 < a ≤ 1, 0 ≤ b ≤ 1/3, 0 ≤ c ≤ 1/3, 1.9 ≤ m ≤ 2, and 0 ≤ n ≤ 0.1; M includes one or more of Mn, Fe, Co, Ni, and Cu; A includes one or more metal elements from Group IA, Group IIA, Group IIIA, Group IVA, Group VA, Group IIB, Group IVB, Group VB, and Group VIB; B includes one or more non-metal elements from Group IIIA, Group IVA, Group VA, and Group VIA; Q includes one or more non-metal elements from Group VA and Group VIIA; and the positive electrode active material includes a K element, and an amount of the K element decreases from a particle surface to a particle interior of the positive electrode active material.

Introducing the K element with an amount decreasing from the particle surface to the particle interior into the positive electrode active material can stabilize a crystal structure of the positive electrode active material and enable the positive electrode active material to have good cycling performance and rate performance.

In any embodiment, a region formed by extending a distance of 0.05 L from the particle surface to the particle interior of the positive electrode active material is denoted as a surface region of the positive electrode active material, where L refers to a long-axis length of a positive electrode active material particle, and a mass of the K element in the surface region of the positive electrode active material accounts for 50% to 95% of a total mass of the K element in the positive electrode active material, optionally 70% to 90%.

The amount of the K element in the positive electrode active material decreases from the particle surface to the particle interior, and the K element is primarily distributed in the surface region of the positive electrode active material. This can effectively reduce stress during cycling of a battery, thereby reducing microcracks. This can also better exert a pillar effect of K⁺, stabilizing the crystal structure of the positive electrode active material, improving interfacial stability, enhancing the stability of the crystal structure, and reducing the probability of collapse or irreversible transformation of the crystal structure after significant sodium deintercalation in the positive electrode active material in a later stage of charging, thereby improving the cycling performance and/or rate performance of the battery.

In any embodiment, the positive electrode active material includes one or more of an O3 phase, a P2 phase, and a P3 phase.

In any embodiment, the positive electrode active material includes an O3 phase; and in a deconvoluted spectrum of an X-ray diffraction pattern of the positive electrode active material, two diffraction peaks exist within a 2θ range of 16.0° to 16.7°, a diffraction peak with 2θ between 16.0° and 16.3° is denoted as the first peak, a diffraction peak with 20 between 16.3° and 16.7° is denoted as the second peak, and a ratio of a peak intensity of the first peak to a peak intensity of the second peak is less than or equal to 0.1:1, optionally less than or equal to 0.076:1. This indicates that an O3 phase bulk structure of the positive electrode active material is well preserved, and the positive electrode active material includes only a small amount of lattice-distorted O3 phase.

In any embodiment, the positive electrode active material includes an O3 phase; and an X-ray diffraction pattern of the positive electrode active material includes a (104) crystal plane diffraction peak with 20 between 41.5° and 42.5° and a (015) crystal plane diffraction peak with 2θ between 44.5° and 45.5°, and a ratio of a peak intensity of the (104) crystal plane diffraction peak to a peak intensity of the (015) crystal plane diffraction peak is greater than 10:1. This indicates that the layered structure of the positive electrode active material is relatively stable and is less prone to crystal plane sliding and aggregation of transition metal elements.

In any embodiment, A includes one or more elements from Li, Ti, Zr, Sb, Nb, Mg, Ca, Mo, Zn, Cr, W, Bi, Sn, Ge, Al, Ba, Sr, and V.

In any embodiment, B includes one or more elements from Si, P, B, S, and Se.

In any embodiment, Q includes one or more elements from F, Cl, and N.

In any embodiment, x ≥ 2/3.

In any embodiment, 0.012 ≤ y ≤ 0.05. The amount of the K element in the positive electrode active material falling within the above range can better stabilize the surface structure of the positive electrode active material, reduce the probability of collapse or irreversible transformation of the crystal structure after significant sodium deintercalation in the positive electrode active material in a later stage of charging, and enable the positive electrode active material to have a high specific capacity as well as good cycling performance and rate performance.

In any embodiment, 0 ≤ b ≤ 1/3, 0 ≤ c ≤ 1/3, and 0 < b + c ≤ 1/3.

In any embodiment, the positive electrode active material includes a layered transition metal oxide represented by Formula (I-1):

NaₓK_{y}MnₚFe_{q}M'_{a-p-q}A_{b}B_{c}OₘQₙ Formula (1-1),

where 0 < p < 1, 0 < q < 1, a - p - q ≥ 0, and M includes one or more elements from Co, Ni, and Cu.

In any embodiment, 0 < p ≤ 2/3.

In any embodiment, 0 < q ≤ 1/3.

In any embodiment, 0 < a - p - q ≤ 1/3.

In any embodiment, an amount of a free alkaline substance on a surface of the positive electrode active material is 0.2wt%-20wt%, optionally 0.5wt%-1.4wt%. A small amount of free alkaline substance on the surface of the positive electrode active material allows the positive electrode active material to have high interfacial stability, thereby facilitating the improvement in the cycling performance and/or rate performance of the battery, and facilitating the improvement in the processing performance of a positive electrode slurry and the battery.

In any embodiment, pH of the positive electrode active material is 11.5-13.5, optionally 11.8-12.6. A low pH of the positive electrode active material allows the positive electrode active material to have high interfacial stability, thereby facilitating the improvement in the cycling performance and/or rate performance of the battery, and facilitating the improvement in the processing performance of the positive electrode slurry and the battery.

In any embodiment, morphology of the positive electrode active material includes one or more of a spherical single crystal, a plate-like single crystal, and a spherical polycrystal.

In any embodiment, a volume-based particle size Dᵥ50 of the positive electrode active material is 3-15 µm, optionally 4-9 µm. The volume-based particle size Dᵥ50 of the positive electrode active material falling within the above range can achieve a high specific capacity and a high compacted density as well as good ion transport capability and rate performance.

A second aspect of this application provides a preparation method of a positive electrode active material. The method includes the following steps: providing an initial positive electrode active material, where the initial positive electrode active material includes a sodium-containing layered transition metal oxide; washing the initial positive electrode active material with an alkaline washing solution, where the alkaline washing solution includes K⁺; and after washing, performing drying to obtain a positive electrode active material, where the positive electrode active material includes a layered transition metal oxide represented by Formula (I):

NaₓK_{y}MₐA_{b}B_{c}OₘQₙ Formula (I),

where x > 0.5, 0 < y < 0.5, 0 < a ≤ 1, 0 ≤ b ≤ 1/3, 0 ≤ c ≤ 1/3, 1.9 ≤ m ≤ 2, and 0 ≤ n ≤ 0.1; M includes one or more of Mn, Fe, Co, Ni, and Cu; A includes one or more metal elements from Group IA, Group IIA, Group IIIA, Group IVA, Group VA, Group IIB, Group IVB, Group VB, and Group VIB; B includes one or more non-metal elements from Group IIIA, Group IVA, Group VA, and Group VIA; Q includes one or more non-metal elements from Group VA and Group VIIA; and the positive electrode active material includes a K element, and an amount of the K element decreases from a particle surface to a particle interior of the positive electrode active material.

The positive electrode active material obtained by the preparation method of this application has a low pH, a small amount of free alkaline substance on a surface, and the K element with an amount decreasing from the particle surface to the particle interior, thereby stabilizing a crystal structure of the positive electrode active material and enabling the positive electrode active material to have good cycling performance and rate performance.

In any embodiment, in the step of washing the initial positive electrode active material with an alkaline washing solution, a washing temperature is less than or equal to 35°C, optionally 20°C-30°C. The washing temperature falling within the above range can further reduce the Na⁺/H⁺ exchange rate and reduce interlayer sodium dissolution.

In any embodiment, in the step of washing the initial positive electrode active material with an alkaline washing solution, a washing duration is less than or equal to 60 min, optionally 5-20 min. The washing duration falling within the above range can further reduce Na⁺/H⁺ exchange and reduce interlayer sodium dissolution.

In any embodiment, pH of the alkaline washing solution is greater than or equal to 12, optionally 13-14. The pH of the alkaline washing solution falling within the above range can further reduce Na⁺/H⁺ exchange and reduce interlayer sodium dissolution.

In any embodiment, a solute in the alkaline washing solution includes one or more of potassium hydroxide, potassium carbonate, and potassium bicarbonate.

In any embodiment, the solvent in the alkaline washing solution includes one or more of water, an alcohol solvent, and an ester solvent, optionally including water.

In any embodiment, the alkaline washing solution further includes Na⁺. The alkaline washing solution including Na⁺ can replenish Na⁺, increase capacity, further reduce Na⁺/H⁺ exchange, reduce interlayer sodium dissolution, and enable the positive electrode active material to better maintain its original layered structure.

In any embodiment, a molar ratio of Na⁺ to K⁺ is 1:(0.1-10), optionally 1:(0.2-2).

In any embodiment, the preparation method further includes the following step: sintering the washed initial positive electrode active material, and obtaining a positive electrode active material after sintering.

Sintering can stabilize the material surface, making the surface which becomes unstable due to washing stable again, thereby repairing surface defects and reducing vacancies. Sintering can also enable K⁺ in the surface layer to stably occupy Na⁺ sites, better exerting the pillar effect, improving the rate performance, and reducing the probability of collapse or irreversible transformation of the crystal structure after significant sodium deintercalation in the positive electrode active material in a later stage of charging. Through sintering, residual K⁺ on the material surface can further diffuse into the particle interior, enabling the amount of the K element to better decrease from the particle surface to the particle interior.

In any embodiment, a sintering temperature is 300°C-600°C, optionally 450°C-550°C.

In any embodiment, a sintering duration is less than or equal to 10 h, optionally 3 h-8 h.

In any embodiment, a sintering atmosphere is an oxygen-containing atmosphere, and more optionally, a volume fraction of oxygen in the sintering atmosphere is 15%-40%. Sintering in the oxygen-containing atmosphere can stabilize the surface structure of the material, allowing surface sodium which becomes unstable due to washing to react with oxygen again to become stable, thereby repairing surface defects, reducing vacancies, and further facilitating the improvement in the cycling performance and/or rate performance of a battery.

Adjusting one or more parameters such as the sintering temperature, the sintering duration, the alkaline washing solution concentration, the washing temperature, and the washing duration within the above ranges allows the amount of the K element to decrease from the particle surface to the particle interior of the positive electrode active material, avoids uniform distribution of the K element in the positive electrode active material and adjusts a distribution region of the K element.

A third aspect of this application provides a positive electrode plate including a positive electrode current collector and a positive electrode film layer disposed on at least one surface of the positive electrode current collector, where the positive electrode film layer includes the positive electrode active material according to the first aspect of this application or a positive electrode active material prepared by the preparation method according to the second aspect of this application.

In any embodiment, based on a total weight of the positive electrode film layer, an amount of the positive electrode active material in the positive electrode film layer is 50wt% to 99wt%, more optionally 85wt% to 99wt%.

A fourth aspect of this application provides a battery including the positive electrode plate according to the third aspect of this application.

A fifth aspect of this application provides an electric apparatus including the battery according to the fourth aspect of this application.

The electric apparatus of this application includes the battery provided by this application, thereby having at least the same advantages as the battery.

### BRIEF DESCRIPTION OF DRAWINGS

To describe the technical solutions in the embodiments of this application more clearly, the following briefly describes the drawings required for describing the embodiments of this application. Apparently, the drawings in the following descriptions show merely some embodiments of this application, and persons of ordinary skill in the art may still derive other drawings from the drawings without creative efforts.
FIG. 1 is a schematic diagram of an embodiment of a battery cell of this application.
FIG. 2 is a schematic exploded view of the embodiment of the battery cell shown in FIG. 1.
FIG. 3 is a schematic diagram of an embodiment of a battery module of this application.
FIG. 4 is a schematic diagram of an embodiment of a battery pack of this application.
FIG. 5 is a schematic exploded view of the embodiment of the battery pack shown in FIG. 4.
FIG. 6 is a schematic diagram of an embodiment of an electric apparatus including a battery of this application as a power source.
FIG. 7 shows X-ray diffraction patterns of positive electrode active materials prepared in Example 1, Comparative Example 1, and Comparative Example 3.
FIG. 8 shows cycling curve graphs of button batteries prepared in Example 1, Comparative Example 1, and Comparative Example 3.

In the drawings, the drawings are not necessarily drawn to actual scale. The description of reference signs is as follows: 1. battery pack; 2. upper box body; 3. lower box body; 4. battery module; 5. battery cell; 51. housing; 52. electrode assembly; and 53 cover plate.

### DESCRIPTION OF EMBODIMENTS

Embodiments that specifically disclose a positive electrode active material, a preparation method thereof, and a positive electrode plate, a battery, and an electric apparatus including the same of this application are described in detail with appropriate reference to the drawings. However, unnecessary detailed descriptions may be omitted. For example, detailed descriptions of well-known matters or repeated descriptions of substantially identical structures may be omitted. This is to avoid unnecessarily prolonging the following descriptions, for ease of understanding by persons skilled in the art. In addition, the drawings and the following descriptions are provided for persons skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that particular range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise specified, a value range of "a-b" is a short representation of any combination of real numbers between a and b, where both a and b are real numbers. For example, a value range of "0-5" means that all real numbers in the range of "0-5" are listed herein, and "0-5" is just an abbreviated representation of a combination of these numbers. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions, and such technical solutions should be considered to be included in the disclosure of this application.

Unless otherwise specified, all technical features and optional technical features of this application can be combined with each other to form new technical solutions, and such technical solutions should be considered to be included in the disclosure of this application.

Unless otherwise specified, all steps of this application may be performed sequentially or randomly, preferably sequentially. For example, the method including steps (a) and (b) indicates that the method may include steps (a) and (b) performed sequentially, or steps (b) and (a) performed sequentially. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, "include" and "contain" can mean that other unlisted components may also be included or contained, or only listed components are included or contained.

Unless otherwise specified, in this application, the term "or" is inclusive. For example, the phrase "A or B" means "A, B, or both A and B." More specifically, any of the following conditions satisfy the condition "A or B": A is true (or present) and B is false (or not present); A is false (or not present) and B is true (or present); or both A and B are true (or present).

In this application, the terms "a plurality of" and "multiple" refer to two or more.

Unless otherwise specified, the terms used in this application have the well-known meanings commonly understood by persons skilled in the art.

Unless otherwise specified, the numerical values of the parameters mentioned in this application may be measured using various test methods commonly used in the art, for example, they may be measured according to the test methods provided in the embodiments of this application. Unless otherwise specified, the test temperature for all parameters is 25°C.

The battery mentioned in the embodiments of this application may be a single physical module that includes one or more battery cells for providing a higher voltage and capacity. For example, the battery mentioned in this application may include a battery cell, a battery module, a battery pack, or the like.

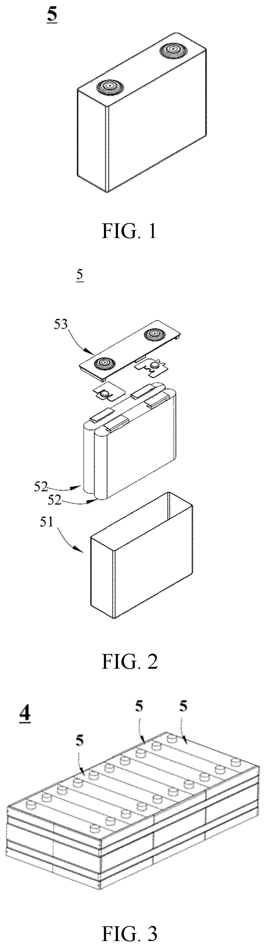

A battery cell is the smallest unit constituting a battery, capable of independently performing charge and discharge functions. The battery cell may be cylindrical, flat, cuboid, or of other shapes, which is not limited in the embodiments of this application. FIG. 1 shows a battery cell 5 with a rectangular structure as an example.

When a plurality of battery cells are provided, the plurality of battery cells are connected in series, parallel, or series-parallel via a busbar. In some embodiments, the battery may be a battery module; and when a plurality of battery cells are provided, the plurality of battery cells are arranged and fixed to form a battery module. In some embodiments, the battery may be a battery pack, where the battery pack includes a box and a battery cell, and the battery cell or battery module is accommodated in the box. In some embodiments, the box may form part of a chassis structure of a vehicle. For example, a portion of the box may form at least a part of the floor of the vehicle, or a portion of the box may form at least a part of a cross beam and longitudinal beam of the vehicle.

In some embodiments, the battery may be an energy storage apparatus. The energy storage apparatus includes an energy storage container, an energy storage cabinet, and the like.

The battery cell provided by the embodiments of this application includes a sodium-ion battery cell, a sodium-metal battery cell, an anode-free sodium-metal battery cell, and the like, which is not limited in the embodiments of this application.

A battery cell typically includes an electrode assembly. The electrode assembly typically includes a positive electrode plate, a negative electrode plate, and a separator located between the positive electrode plate and the negative electrode plate. The electrode assembly may have a wound structure or a stacked structure, which is not limited in the embodiments of this application.

The battery cell may further include an outer package. The outer package may be used to encapsulate an electrode assembly and an electrolyte. The outer package may be a hard shell, for example, a hard plastic shell, an aluminum shell, or a steel shell. The outer package may alternatively be a soft pack, for example, a soft pouch. The material of the soft pack may be plastic, for example, one or more of polypropylene (PP), polybutylene terephthalate (PBT), and polybutylene succinate (PBS).

In some embodiments, as shown in FIG. 2, the outer package may include a housing 51 and a cover plate 53. The housing 51 may include a bottom plate and side plates connected to the bottom plate, with the bottom plate and side plates enclosing to form an accommodating cavity. The housing 51 has an opening communicating with the accommodating cavity, and the cover plate 53 is used to cover the opening to seal the accommodating cavity. The electrode assembly 52 is encapsulated in the accommodating cavity. The battery cell 5 may include one or more electrode assemblies 52, and the specific quantity may be adjusted based on needs.

In some embodiments, the battery cell may be assembled into a battery module, and the battery module may include a plurality of battery cells. The specific quantity may be adjusted according to the application and capacity of the battery module. FIG. 3 is a schematic diagram of a battery module 4 as an example. As shown in FIG. 3, in the battery module 4, a plurality of battery cells 5 may be sequentially arranged along a length direction of the battery module 4. Certainly, the battery cells may alternatively be arranged in any other manners. Further, the plurality of battery cells 5 may be fixed by fasteners.

Optionally, the battery module 4 may further include an enclosure with an accommodating space, and the plurality of battery cells 5 are accommodated in the accommodating space.

In some embodiments, the battery module may be further assembled into a battery pack, and the battery pack may include one or more battery modules. The specific quantity may be adjusted according to the application and capacity of the battery pack.

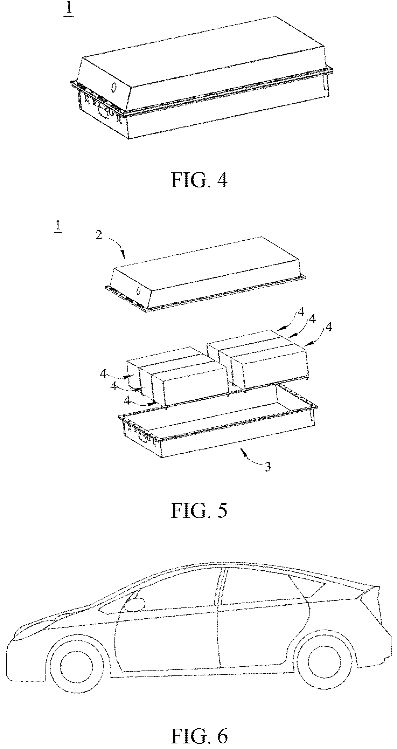

FIG. 4 and FIG. 5 are schematic diagrams of a battery pack 1 as an example. Referring to FIG. 4 and FIG. 5, the battery pack 1 may include a box and a plurality of battery modules 4 disposed in the box. The box includes an upper box body 2 and a lower box body 3, where the upper box body 2 can fit the lower box body 3 to form a closed space for accommodating the battery modules 4. The plurality of battery modules 4 may be arranged in the box in any manner.

In a sodium battery, a sodium-containing layered transition metal oxide is typically used as a positive electrode active material, resulting in poor interfacial stability; and a high-temperature sintering process is typically necessary during preparation of the positive electrode active material. To improve the yield and compensate for the volatilization of Na during high-temperature sintering, a sodium source added is typically excessive. Thus, after the high-temperature sintering process, the partial sodium source remains on the surface of the positive electrode active material and reacts with moisture and CO₂ in the air to form a free alkaline substance such as NaOH and Na₂CO₃. The free alkaline substance causes a positive electrode slurry to be prone to gelation or curing, affecting the coating performance of the positive electrode slurry and the performance of the battery. The alkaline substance such as Na₂CO₃ has poor thermal stability and is prone to decomposition and gas production under high pressure. The alkaline substance does not have electrochemical activity, and an excessive amount of alkaline substance may hinder sodium ion transport. In addition, after the high-temperature sintering process, the free alkaline substance such as NaOH and Na₂CO₃ is inevitably formed on the surface of the positive electrode active material. If the free alkaline substance is not removed, the free alkaline substance will continue to react with moisture and CO₂ in the air and an electrolyte, further hindering sodium ion transport, and even causing partial sodium to deintercalate from a crystal structure of the positive electrode active material, resulting in deteriorated stability of the crystal structure, and making the crystal structure prone to irreversible transformation, thereby affecting the capacity of the positive electrode active material, battery preparation, and battery performance.

Current surface modification techniques mainly include coating modification and washing modification.

Coating modification typically involves coating the surface of the positive electrode active material with an inactive material, which often leads to reduced specific capacity and ion transport capability of the positive electrode active material, thereby deteriorating the cycling performance and rate performance of the positive electrode active material.

Washing processes mainly include two types: one is washing with water or acidic solutions, and the other is washing with organic solvents. Washing with water or acidic solutions has good application effects in lithium batteries, effectively reducing an amount of a free alkaline substance (mainly including LiOH and Li₂CO₃) on a surface of a lithium-containing positive electrode active material, especially a ternary material (for example, NCM). However, a positive electrode active material for sodium batteries, particularly a sodium-containing layered transition metal oxide, is highly sensitive to water and acids. Washing with water or acidic solutions is highly prone to Na⁺/H⁺ exchange, leading to reduced lattice sodium and deteriorated stability of the crystal structure, and making the crystal structure prone to irreversible transformation. Washing with organic solvents also results in Na⁺/H⁺ exchange, leading to reduced lattice sodium of the positive electrode active material and deteriorated stability of the crystal structure, and making the crystal structure prone to irreversible transformation; and the washing process with organic solvents is complex and costly.

In view of the above issues, the inventors of this application, through research, provide a potassium-ion-doped positive electrode active material with high stability of a crystal structure and good cycling performance and rate performance.

The positive electrode active material provided by an embodiment of this application includes a layered transition metal oxide represented by Formula (I):

NaₓK_{y}MₐA_{b}B_{c}OₘQₙ Formula (I),

where x > 0.5, 0 < y < 0.5, 0 < a ≤ 1, 0 ≤ b ≤ 1/3, 0 ≤ c ≤ 1/3, 1.9 ≤ m ≤ 2, and 0 ≤ n ≤ 0.1; M includes one or more of Mn, Fe, Co, Ni, and Cu; A includes one or more metal elements from Group IA, Group IIA, Group IIIA, Group IVA, Group VA, Group IIB, Group IVB, Group VB, and Group VIB; B includes one or more non-metal elements from Group IIIA, Group IVA, Group VA, and Group VIA; Q includes one or more non-metal elements from Group VA and Group VIIA; and the positive electrode active material includes a K element, and an amount of the K element decreases from a particle surface to a particle interior of the positive electrode active material.

K⁺ has a large ionic radius (approximately 0.138 nm), and after K⁺ occupies some Na⁺ sites in a surface layer of the positive electrode active material, an interlayer spacing of the positive electrode active material can be increased, thereby enabling the positive electrode active material to have good rate performance.

After significant sodium deintercalation in the positive electrode active material in a later stage of charging, a crystal structure has deteriorated stability and is prone to irreversible transformation from a layered structure to a rock-salt phase structure. After K⁺ is introduced into the positive electrode active material, K⁺ can exert a pillar effect, stabilizing the crystal structure of the positive electrode active material, improving interfacial stability, enhancing the stability of the crystal structure, and reducing the probability of collapse or irreversible transformation of the crystal structure after significant sodium deintercalation in the positive electrode active material in the later stage of charging, thereby improving the cycling stability of the positive electrode active material.

The amount of the K element in the positive electrode active material decreases from the particle surface to the particle interior, thereby effectively reducing stress during cycling of a battery, reducing microcracks, and enabling a battery using the positive electrode active material to have a long cycle life.

Therefore, introducing the K element with an amount decreasing from the particle surface to the particle interior into the positive electrode active material can stabilize the crystal structure of the positive electrode active material and enable the positive electrode active material to have good cycling performance and rate performance.

Unless otherwise specified, in the chemical formula of the positive electrode active material, when M includes two or more elements, the numerical range limitation for a applies not only to the stoichiometric number of each element acting as M but also to the sum of the stoichiometric numbers of all elements acting as M. For example, when M includes two or more elements M1, M2, ..., and Mn, the stoichiometric numbers a1, a2, ..., and an of M1, M2, ..., and Mn must each fall within the numerical range defined for a in this application, and the sum of a1, a2, ..., and an must also fall within this numerical range. Similarly, in the embodiments of this application, for cases where other elements include two or more elements, the numerical range limitation for their stoichiometric numbers has the same meaning.

M includes one or more elements from Mn, Fe, Co, Ni, and Cu.

The layered transition metal oxide may be a unary material or a multi-element material. The "unary material" refers to a material containing only one transition metal M. For example, the transition metal M includes one of Mn, Fe, Co, Ni, and Cu. The "multi-element material" refers to a material containing at least two transition metals M. For example, the transition metal M includes at least two of Mn, Fe, Co, Ni, and Cu, such as a combination of Mn and Fe, a combination of Mn, Fe, and Ni, or a combination of Mn, Fe, and Cu.

In some embodiments, the positive electrode active material may include a layered transition metal oxide represented by Formula (I-1):

NaₓK_{y}MnₚFe_{q}M'_{a-p-q}A_{b}B_{c}OₘQₙ Formula (I-1),

where 0 < p < 1, 0 < q < 1, a - p - q ≥ 0, and M includes one or more elements from Co, Ni, and Cu.

In some embodiments, 0 < p ≤ 2/3.

In some embodiments, 0 < q ≤ 1/3.

In some embodiments, 0 ≤ a - p - q ≤ 1/3, optionally 0 < a - p - q ≤ 1/3.

In some embodiments, x may be ≥ 2/3, ≥ 0.7, ≥ 0.8, ≥ 0.9, ≥ 0.92, ≥ 0.94, or ≥ 0.96.

In some embodiments, 0.001 ≤ y < 0.5, optionally 0.001 ≤ y ≤ 0.4, 0.001 ≤ y ≤ 0.3, 0.001 ≤ y ≤ 0.2, 0.001 ≤ y ≤ 0.1, 0.001 ≤ y ≤ 0.05, 0.005 ≤ y ≤ 0.05, 0.008 ≤ y ≤ 0.05, or 0.012 ≤ y ≤ 0.05. The amount of the K element in the positive electrode active material falling within the above range can better stabilize the surface structure of the positive electrode active material, reduce the probability of collapse or irreversible transformation of the crystal structure after significant sodium deintercalation in the positive electrode active material in a later stage of charging, and enable the positive electrode active material to have a high specific capacity as well as good cycling performance and rate performance. When the amount of the K element is excessively large, since the K element does not provide capacity, the specific capacity of the positive electrode active material is reduced; and excessive K⁺ occupying Na⁺ sites also hinders Na⁺ migration, affecting the cycling performance and rate performance of the battery.

In some embodiments, b is 0.

In some embodiments, 0 < b ≤ 1/3.

In some embodiments, c is 0.

In some embodiments, 0 < c ≤ 1/3.

In some embodiments, b is 0 and c is 0.

In some embodiments, 0 < b ≤ 1/3 and 0 < c ≤ 1/3.

In some embodiments, 0 ≤ b ≤ 1/3, 0 ≤ c ≤ 1/3, and 0 < b + c ≤ 1/3. For example, b is 0, and 0 < c ≤ 1/3; or c is 0, and 0 < b ≤ 1/3; or 0 < b < 1/3, 0 < c < 1/3, and 0 < b + c ≤ 1/3.

A total amount of elements A and B falling within an appropriate range helps to further improve the cycling performance and/or rate performance of the battery.

In some embodiments, A may include one or more elements from Li, Ti, Zr, Sb, Nb, Mg, Ca, Mo, Zn, Cr, W, Bi, Sn, Ge, Al, Ba, Sr, and V.

In some embodiments, B may include one or more elements from Si, P, B, S, and Se.

In some embodiments, n is 0.

In some embodiments, 0 < n ≤ 0.1. An amount of element Q falling within an appropriate range helps to further improve the cycling performance and/or rate performance of the battery.

In some embodiments, Q may include one or more elements from F, Cl, and N.

The amounts of the elements in the positive electrode active material can be tested using inductively coupled plasma emission spectroscopy (ICP) in accordance with EPA 6010D-2014.

In some embodiments, a region formed by extending a distance of 0.05 L from the particle surface to the particle interior of the positive electrode active material is denoted as a surface region of the positive electrode active material, where L refers to a long-axis length of the positive electrode active material particle, and a mass of the K element in the surface region of the positive electrode active material accounts for 50% to 95% of a total mass of the K element in the positive electrode active material, optionally 70% to 95%, 75% to 95%, 80% to 95%, 83% to 95%, 70% to 92%, 75% to 92%, 80% to 92%, 83% to 92%, 70% to 90%, 75% to 90%, 80% to 90%, or 83% to 90%.

The amount of the K element in the positive electrode active material decreases from the particle surface to the particle interior, and the K element is primarily distributed in the surface region of the positive electrode active material. This can effectively reduce stress during cycling of a battery, thereby reducing microcracks. This can also better exert a pillar effect of K⁺, stabilizing the crystal structure of the positive electrode active material, improving interfacial stability, enhancing the stability of the crystal structure, and reducing the probability of collapse or irreversible transformation of the crystal structure after significant sodium deintercalation in the positive electrode active material in a later stage of charging, thereby improving the cycling performance and/or rate performance of the battery.

The proportion of the mass of the K element in the surface region of the positive electrode active material relative to the total mass of the K element in the positive electrode active material can be obtained by testing a cross-sectional image of the positive electrode active material.

The cross-sectional image of the positive electrode active material includes a cross-sectional image passing through the center of a positive electrode active material particle. The "particle center" refers to a range within a radius of 0.1 µm extending from the geometric center of the particle to the particle surface.

The long-axis length of the positive electrode active material particle refers to a maximum value of a line connecting two points on the particle surface that passes through the geometric center of the particle.

The cross-section of the positive electrode active material can be prepared using a cross-sectional polisher (for example, an IB-09010 CP argon ion cross-sectional polisher from JEOL, Japan); then, with reference to JY/T010-1996, the cross-section of the positive electrode active material is scanned using a scanning electron microscope (for example, a Sigma 300 scanning electron microscope from ZEISS, Germany); and subsequently, testing is performed using an inductively coupled plasma emission spectroscopy (ICP).

The proportion of the mass of the K element in the surface region (a region formed by extending a distance of 0.05 L from the edge to the interior of a particle in the cross-sectional image, where L refers to the long-axis length of the positive electrode active material particle) of the obtained cross-sectional image of the positive electrode active material relative to a total mass of the K element in the obtained cross-sectional image of the positive electrode active material is taken as the proportion of the mass of the K element in the surface region of the positive electrode active material relative to the total mass of the K element in the positive electrode active material.

In some embodiments, a volume-based particle size Dᵥ50 of the positive electrode active material may be 3-15 µm, optionally 4-9 µm. The volume-based particle size Dᵥ50 of the positive electrode active material falling within the above range can achieve a high specific capacity and a high compacted density as well as good ion transport capability and rate performance.

The volume-based particle size Dᵥ50 of the positive electrode active material has a well-known meaning in the art, refers to a particle size corresponding to a cumulative volume distribution percentage of 50%, and can be tested using well-known instruments and methods in the art. For example, the volume-based particle size Dᵥ50 can be conveniently tested using a laser particle size analyzer in accordance with GB/T 19077-2016. A test instrument may be a Mastersizer 2000E laser particle size analyzer from Malvern Instruments Ltd., UK.

In some embodiments, morphology of the positive electrode active material may include one or more of a spherical single crystal, a plate-like single crystal, and a spherical polycrystal.

The term "single crystal" further includes a pseudo-single crystal, where the pseudo-single crystal refers to particles formed by aggregation of several or a dozen crystal grains.

The term "spherical" further includes a pseudo-spherical shape, where the pseudo-spherical shape refers to a shape that is basically spherical or has an aspect ratio close to 1, for example, an aspect ratio not greater than 1.3, optionally not greater than 1.2.

The morphology of the positive electrode active material can be tested using a scanning electron microscope. For example, the morphology of the positive electrode active material can be tested with reference to JY/T010-1996. A test instrument may be a Sigma 300 scanning electron microscope from ZEISS, Germany.

In some embodiments, the positive electrode active material may include one or more of an O3 phase, a P2 phase, and a P3 phase.

In some embodiments, the positive electrode active material includes an O3 phase; and in a deconvoluted spectrum of an X-ray diffraction pattern of the positive electrode active material, two diffraction peaks exist within a 2θ range of 16.0° to 16.7°, a diffraction peak with 20 between 16.0° and 16.3° is denoted as the first peak, a diffraction peak with 20 between 16.3° and 16.7° is denoted as the second peak, and a ratio of a peak intensity of the first peak to a peak intensity of the second peak is less than or equal to 0.1:1, optionally less than or equal to 0.076:1.

The X-ray diffraction pattern of the positive electrode active material is obtained by testing using an X-ray diffractometer. The test can be conducted under the following conditions: CuK_{α} ray is used as a radiation source, where a radiation wavelength λ is 1.5406 Å, a scanning 20 angle range is 10° to 70°, and a scanning velocity is 4°/min; and a test instrument may be a Brucker D8A_A25 X-ray powder diffractometer from Brucker AxS, Germany.

The deconvoluted spectrum of the X-ray diffraction pattern of the positive electrode active material is obtained by refining the X-ray diffraction pattern of the positive electrode active material using Topas software with the Rietveld full-spectrum fitting method, where 2θ from 16.0° to 16.7° corresponds to a peak position of a (003) crystal plane of the positive electrode active material.

The first peak with 20 between 16.0° and 16.3° represents the lattice-distorted O3 phase.

The second peak with 2θ between 16.3° and 16.7° represents the main O3 phase.

The ratio of the peak intensity of the first peak to the peak intensity of the second peak represents a ratio of an amount of the lattice-distorted O3 phase to an amount of the main O3 phase.

The ratio of the peak intensity of the first peak to the peak intensity of the second peak is a ratio of an integral area of the first peak to an integral area of the second peak.

In the deconvoluted spectrum of the X-ray diffraction pattern of the positive electrode active material provided by the embodiments of this application, the ratio of the peak intensity of the first peak to the peak intensity of the second peak is less than or equal to 0.1:1, indicating that an O3 phase bulk structure of the positive electrode active material provided by the embodiments of this application is well preserved, and the positive electrode active material includes only a small amount of lattice-distorted O3 phase.

In some embodiments, the positive electrode active material includes an O3 phase; and an X-ray diffraction pattern of the positive electrode active material includes a (104) crystal plane diffraction peak with 20 between 41.5° and 42.5° and a (015) crystal plane diffraction peak with 2θ between 44.5° and 45.5°, and a ratio of a peak intensity of the (104) crystal plane diffraction peak to a peak intensity of the (015) crystal plane diffraction peak is greater than 10:1.

The ratio of the peak intensity of the (104) crystal plane diffraction peak to the peak intensity of the (015) crystal plane diffraction peak is a ratio of an integral area of the (104) crystal plane diffraction peak to an integral area of the (015) crystal plane diffraction peak.

In the X-ray diffraction pattern of the positive electrode active material provided by the embodiments of this application, the ratio of the peak intensity of the (104) crystal plane diffraction peak to the peak intensity of the (015) crystal plane diffraction peak is greater than 10:1, indicating that the layered structure of the positive electrode active material provided by the embodiments of this application is relatively stable and is less prone to crystal plane sliding and aggregation of transition metal elements.

In some embodiments, an interlayer spacing d₀₀₃ of the (003) crystal plane of the positive electrode active material is 16-16.3 Å. In this case, the positive electrode active material may have good rate performance and high stability.

The interlayer spacing d₀₀₃ of the (003) crystal plane of the positive electrode active material has a well-known meaning in the art, and the interlayer spacing d₀₀₃ of the (003) crystal plane can be measured using an X-ray diffractometer in accordance with JIS K0131-1996 General Rules for X-ray Diffraction Analysis to obtain the X-ray diffraction pattern. The test can be conducted under the following conditions: CuK_{α} ray is used as a radiation source, a ray wavelength λ is 1.5406 Å, a scanning 20 angle range is 10° to 70°, and a scanning velocity is 4°/min. A test instrument may be a Brucker D8A_A25 X-ray powder diffractometer from Brucker AxS, Germany.

In some embodiments, an amount of a free alkaline substance on a surface of the positive electrode active material may be 0.2wt%-20wt%, optionally 0.2wt%-15wt%, 0.2wt%-10wt%, 0.2wt%-5wt%, 0.2wt%-2.5wt%, 0.2wt%-2wt%, 0.5wt%-1.5wt%, or 0.5wt%-1.4wt%. A small amount of free alkaline substance on the surface of the positive electrode active material allows the positive electrode active material to have high interfacial stability, thereby facilitating the improvement in the cycling performance and/or rate performance of the battery, and facilitating the improvement in the processing performance of a positive electrode slurry and the battery.

The free alkaline substance on the surface of the positive electrode active material mainly includes NaOH and Na₂CO₃, and the amount of the free alkaline substance can be tested using a chemical titration method or a potentiometric titration method. The amount of the free alkaline substance on the surface of the positive electrode active material varies depending on the type of positive electrode active material.

In some embodiments, pH of the positive electrode active material may be 11.5-13.5, optionally 11.8-12.6. A low pH of the positive electrode active material allows the positive electrode active material to have high interfacial stability, thereby facilitating the improvement in the cycling performance and/or rate performance of the battery, and facilitating the improvement in the processing performance of the positive electrode slurry and the battery.

The pH of the positive electrode active material has a well-known meaning in the art and can be tested using well-known instruments and methods in the art. For example, the pH of the positive electrode active material can be tested in accordance with GB/T 9724-2007. In some embodiments, the pH of the positive electrode active material can be tested in the following steps: at 25°C, a positive electrode active material sample is mixed with deionized water at a mass ratio of 1:9 to prepare a solution; the resulting solution is sealed, stirred on a magnetic stirrer for 30 min, then left standing for 90 min and filtered; the pH of the resulting filtrate is tested using a pH meter (for example, pHS-3C) to obtain the pH of the positive electrode active material.

### [Preparation method]

An embodiment of this application further provides a method for preparing a positive electrode active material. The method includes the following steps: providing an initial positive electrode active material, where the initial positive electrode active material includes a sodium-containing layered transition metal oxide; washing the initial positive electrode active material with an alkaline washing solution, where the alkaline washing solution includes K⁺; and after washing, performing drying to obtain a positive electrode active material.

The positive electrode active material includes a layered transition metal oxide represented by Formula (I):

NaₓK_{y}MₐA_{b}B_{c}OₘQₙ Formula (I),

where x > 0.5, 0 < y < 0.5, 0 < a ≤ 1, 0 ≤ b ≤ 1/3, 0 ≤ c ≤ 1/3, 1.9 ≤ m ≤ 2, and 0 ≤ n ≤ 0.1; M includes one or more of Mn, Fe, Co, Ni, and Cu; A includes one or more metal elements from Group IA, Group IIA, Group IIIA, Group IVA, Group VA, Group IIB, Group IVB, Group VB, and Group VIB; B includes one or more non-metal elements from Group IIIA, Group IVA, Group VA, and Group VIA; Q includes one or more non-metal elements from Group VA and Group VIIA; and the positive electrode active material includes a K element, and an amount of the K element decreases from a particle surface to a particle interior of the positive electrode active material.

The preparation method provided by this embodiment of this application uses the alkaline washing solution containing K⁺ to wash the sodium-containing layered transition metal oxide. During the washing process, a free alkaline substance (such as NaOH and Na₂CO₃) on a material surface are removed, so that the obtained positive electrode active material has a small amount of free alkaline substance on the surface and a low pH. During the washing process, K⁺ in a high concentration in the alkaline washing solution undergoes K⁺/Na⁺ ion exchange with Na⁺ in the material, thereby doping K⁺ into the material. In addition, since the washing solution is alkaline and contains a large amount of OH⁻, Na⁺/H⁺ exchange can also be suppressed.

After significant sodium deintercalation in the positive electrode active material in a later stage of charging, a crystal structure has deteriorated stability and is prone to irreversible transformation from a layered structure to a rock-salt phase structure. After K⁺ is introduced into the positive electrode active material, K⁺ can exert a pillar effect, stabilizing the crystal structure of the positive electrode active material, improving interfacial stability, enhancing the stability of the crystal structure, and reducing the probability of collapse or irreversible transformation of the crystal structure after significant sodium deintercalation in the positive electrode active material in the later stage of charging.

K⁺ has a large ionic radius (approximately 0.138 nm), and after K⁺ occupies some Na⁺ sites in a surface layer of the positive electrode active material, an interlayer spacing of the positive electrode active material can be increased, thereby enabling the positive electrode active material to have good rate performance.

The amount of the K element in the positive electrode active material decreases from the particle surface to the particle interior, thereby effectively reducing stress during cycling of a battery, reducing microcracks, and enabling a battery using the positive electrode active material to have a long cycle life.

Therefore, the positive electrode active material obtained by the preparation method provided by this embodiment of this application has a low pH, a small amount of a free alkaline substance on a surface, and the K element with an amount decreasing from the particle surface to the particle interior, thereby stabilizing the crystal structure of the positive electrode active material and enabling the positive electrode active material to have good cycling performance and rate performance.

The sodium-containing layered transition metal oxide is extremely sensitive to moisture, and washing with water or acidic solutions is prone to Na⁺/H⁺ exchange and sodium deintercalation due to moisture entering the crystal structure of the material. In addition, after significant sodium ion deintercalation, the sodium-containing layered transition metal oxide is also prone to crystal plane sliding, causing significant changes in an X-ray diffraction pattern of the material. Taking an O3 phase layered transition metal oxide as an example, after washing with water or acidic solutions, a (003) crystal plane diffraction peak in the X-ray diffraction pattern of the material tends to shift to a lower angle, while a (015) crystal plane diffraction peak is strengthened and a (104) crystal plane diffraction peak is weakened.

The positive electrode active material obtained by the preparation method provided by this embodiment of this application shows almost no change in crystal structure compared to the initial positive electrode active material before washing, and the intensity and position of each characteristic peak in the X-ray diffraction pattern also show almost no change. Taking an O3 phase layered transition metal oxide as an example, in the positive electrode active material obtained by the preparation method provided by this embodiment of this application, a ratio of a peak intensity of the (104) crystal plane diffraction peak to a peak intensity of the (015) crystal plane diffraction peak is greater than 10:1; and in a deconvoluted spectrum of the X-ray diffraction pattern of the positive electrode active material, two diffraction peaks exist within a 20 range of 16.0° to 16.7°, where a diffraction peak with 20 between 16.0° and 16.3° is denoted as the first peak, a diffraction peak with 20 between 16.3° and 16.7° is denoted as the second peak, and a ratio of the peak intensity of the first peak to a peak intensity of the second peak is less than or equal to 0.1:1. In addition, compared to the X-ray diffraction pattern of the material before washing, the shift of the (003) crystal plane diffraction peak to the lower angle is less than or equal to 0.2°.

In some embodiments, the initial positive electrode active material refers to a positive electrode active material to be washed. The initial positive electrode active material includes a sodium-containing layered transition metal oxide and may be a material known in the art, which is not limited in the embodiments of this application. The initial positive electrode active material can be prepared using methods known in the art, for example, it can be obtained by solid-phase sintering or purchased commercially. In some embodiments, the initial positive electrode active material may include Naₓ₁MₐA_{b}B_{c}OₘQₙ, where x1 > 0.5, and other parameters are as defined above, which will not be repeated here.

In some embodiments, the preparation method further includes the following step: sintering the washed initial positive electrode active material, and obtaining a positive electrode active material after sintering.

Washing can make the surface properties of the material less stable. Sintering can stabilize the material surface, making the surface which becomes unstable due to washing stable again, thereby repairing surface defects and reducing vacancies. Sintering can also enable K⁺ in the surface layer to stably occupy Na⁺ sites, better exerting the pillar effect, improving the rate performance, and reducing the probability of collapse or irreversible transformation of the crystal structure after significant sodium deintercalation in the positive electrode active material in a later stage of charging.

During the washing process, K⁺ occupies a large number of Na⁺ sites in a shallow surface layer through ion exchange, but some K⁺ remains on the material surface. Through sintering, residual K⁺ on the material surface can further diffuse into the particle interior, enabling the amount of the K element to better decrease from the particle surface to the particle interior. Compared to a positive electrode active material with uniformly doped K element, the positive electrode active material with a decreasing K element amount can effectively alleviate stress during cycling of the battery, thereby reducing microcracks and improving the cycling performance of the positive electrode active material and the battery.

In some embodiments, a sintering temperature may be 200°C-700°C, optionally 300°C-600°C, and more optionally 450°C-550°C.

In some embodiments, a sintering duration may be less than or equal to 20 h, optionally less than or equal to 10 h, and more optionally 3 h-8 h or 3 h-5 h.

In some embodiments, a sintering atmosphere may be an oxygen-containing atmosphere. Sintering in the oxygen-containing atmosphere can stabilize the surface structure of the material, allowing surface sodium which becomes unstable due to washing to react with oxygen again to become stable, thereby repairing surface defects, reducing vacancies, and further facilitating the improvement in the cycling performance and/or rate performance of the battery.

In some embodiments, a volume fraction of oxygen in the sintering atmosphere may be 15%-40% or 17%-30%.

In some embodiments, the sintering atmosphere may further contain an inert gas, for example, one or more of nitrogen, helium, and argon.

In some embodiments, the sintering atmosphere may be an air atmosphere. This can reduce production costs.

In some embodiments, morphology of the initial positive electrode active material may include one or more of a spherical single crystal, a plate-like single crystal, and a spherical polycrystal.

K⁺ can diffuse to an appropriate depth through ion exchange and sintering. For the spherical single crystal or polycrystal, Na⁺ migration channels can extend along various directions, so K⁺/Na⁺ ion exchange and K⁺ diffusion can also occur along various directions, and K⁺ doping is also formed along various directions. For the plate-like single crystal, a larger plane is an ab plane, and a direction perpendicular to this plane is a c-axis direction. Na⁺ migration typically occurs along the ab plane, so K⁺ doping typically occurs along a direction perpendicular to the c-axis.

In some embodiments, in the step of washing the initial positive electrode active material with an alkaline washing solution, a washing temperature may be less than or equal to 35°C, optionally 20°C-30°C. The washing temperature falling within the above range can further reduce the Na⁺/H⁺ exchange rate and reduce interlayer sodium dissolution.

In some embodiments, in the step of washing the initial positive electrode active material with an alkaline washing solution, a washing duration may be less than or equal to 60 min, optionally less than or equal to 20 min, and more optionally 5-20 min. The washing duration falling within the above range can further reduce Na⁺/H⁺ exchange and reduce interlayer sodium dissolution.

In some embodiments, in the step of washing the initial positive electrode active material with an alkaline washing solution, pH of the alkaline washing solution may be greater than or equal to 11, optionally greater than or equal to 12, and more optionally 12.5-14 or 13-14. The pH of the alkaline washing solution falling within the above range can further reduce Na⁺/H⁺ exchange and reduce interlayer sodium dissolution.

In some embodiments, the solute in the alkaline washing solution may include a soluble potassium salt, for example, including but not limited to one or more of potassium hydroxide, potassium carbonate, and potassium bicarbonate.

In some embodiments, the solvent in the alkaline washing solution may include one or more of water, an alcohol solvent, and an ester solvent, optionally including water.

In some embodiments, the solvent in the alkaline washing solution may include only water, for example, deionized water.

In some embodiments, the alkaline washing solution may further include Na⁺. For example, the solute in the alkaline washing solution may further include a soluble sodium salt, for example, including but not limited to one or more of sodium hydroxide, sodium carbonate, and sodium bicarbonate.

When washing with the alkaline washing solution, part of Na is removed, leading to defects and vacancies on the material surface. The alkaline washing solution including Na⁺ can replenish Na⁺ and increase capacity. In addition, during sintering, residual Na⁺ on the material surface can react with oxygen again, repairing surface defects and reducing vacancies.

The alkaline washing solution including Na⁺ can further reduce Na⁺/H⁺ exchange, reduce interlayer sodium dissolution, and enable the positive electrode active material to better maintain its original layered structure.

In some embodiments, a molar ratio of Na⁺ to K⁺ may be 1:(0.1-1), optionally 1:(0.2-5), and more optionally 1:(0.2-2).

Adjusting one or more parameters such as the sintering temperature, the sintering duration, the alkaline washing solution concentration, the washing temperature, and the washing duration within the above ranges allows the amount of the K element to decrease from the particle surface to the particle interior of the positive electrode active material, avoids uniform distribution of the K element in the positive electrode active material, and adjusts a distribution region of the K element, so that a mass of K element in the surface region of the positive electrode active material accounts for 50% to 95% of a total mass of the K element in the positive electrode active material, optionally 70% to 95%, 75% to 95%, 80% to 95%, 83% to 95%, 70% to 92%, 75% to 92%, 80% to 92%, 83% to 92%, 70% to 90%, 75% to 90%, 80% to 90%, or 83% to 90%.

In some embodiments, 0.001 ≤ y < 0.5, optionally, 0.001 ≤ y ≤ 0.4, 0.001 ≤ y ≤ 0.3, 0.001 ≤ y ≤ 0.2, 0.001 ≤ y ≤ 0.1, 0.001 ≤ y ≤ 0.05, 0.005 ≤ y ≤ 0.05, 0.008 ≤ y ≤ 0.05, or 0.012 ≤ y ≤ 0.05. The amount of the K element in the positive electrode active material falling within the above range can better stabilize the surface structure of the positive electrode active material, reduce the probability of collapse or irreversible transformation of the crystal structure after significant sodium deintercalation in the positive electrode active material in a later stage of charging, and enable the positive electrode active material to have a high specific capacity as well as good cycling performance and rate performance. When the amount of the K element is excessively large, since the K element does not provide capacity, the specific capacity of the positive electrode active material is reduced; and excessive K⁺ occupying Na⁺ sites also hinders Na⁺ migration, affecting the cycling performance and rate performance of the battery.

In some embodiments, a preparation method of a positive electrode active material includes the following steps: providing an initial positive electrode active material, where the initial positive electrode active material includes a sodium-containing layered transition metal oxide; washing the initial positive electrode active material with an alkaline washing solution, where the alkaline washing solution includes K⁺, and pH of the alkaline washing solution is greater than or equal to 12, optionally 13-14; and sintering the washed initial positive electrode active material, and obtaining a positive electrode active material after sintering.

This can further reduce Na⁺/H⁺ exchange, reduce interlayer sodium dissolution, and stabilize the structure of the positive electrode active material.

In some embodiments, a preparation method of a positive electrode active material includes the following steps: providing an initial positive electrode active material, where the initial positive electrode active material includes a sodium-containing layered transition metal oxide; washing the initial positive electrode active material with an alkaline washing solution, where the alkaline washing solution includes K⁺ and Na⁺, the molar ratio of Na⁺ to K⁺ may be 1:(0.1-1), optionally 1:(0.2-2), pH of the alkaline washing solution is greater than or equal to 12, optionally 13-14, a washing temperature is less than or equal to 35°C, optionally 20°C-30°C, and a washing duration is less than or equal to 60 min, optionally 5-20 min; sintering the washed initial positive electrode active material and obtaining a positive electrode active material after sintering, where a sintering temperature is 300°C-600°C, optionally 450°C-550°C, a sintering duration is less than or equal to 10 h, optionally 3 h-8 h, and a sintering atmosphere is an oxygen-containing atmosphere, optionally with an oxygen volume fraction of 15%-40%.

This can further stabilize the structure of the positive electrode active material, enable the positive electrode active material to better maintain its original layered structure, increase the capacity of the positive electrode active material, and improve the cycling performance and rate performance of the positive electrode active material.

Unless otherwise specified, all raw materials used in the above preparation method can be purchased commercially.

### [Positive electrode plate]

An embodiment of this application further provides a positive electrode plate.

The positive electrode plate includes a positive electrode current collector and a positive electrode film layer disposed on at least one surface of the positive electrode current collector, where the positive electrode film layer includes the positive electrode active material described above in this application or a positive electrode active material prepared by the preparation method described above in this application.

In some embodiments, based on a total weight of the positive electrode film layer, an amount of the positive electrode active material in the positive electrode film layer is 50wt% to 99wt%, optionally 85wt% to 99wt%.

The positive electrode current collector has two opposite surfaces in its thickness direction, and the positive electrode film layer is disposed on either or both of the two opposite surfaces of the positive electrode current collector.

The positive electrode film layer may further include other positive electrode active materials known in the art, for example, including but not limited to one or more of fluorides, sulfides, phosphates, pyrophosphates, metal-organic frameworks/metal hexacyanides, and organic compounds. These other positive electrode active materials may be used alone or in combination of two or more. For example, other positive electrode active materials may include one or more of NaCoO₂, Na_{2/3}[Cu_{1/3}Mn_{2/3}]O₂, Na_{2/3}[Fe_{1/3}Mn_{2/3}]O₂, Na_{2/3}[Li_{1/3}Ni_{2/3}]O₂, Na[Ni_{0.5}Co_{0.5}]O₂, Na_{7/9}[Cu_{2/9}Fe_{1/9}Mn_{2/3}]O₂, Na_{2/3}[Li_{1/3}Mn_{1/2}Ti_{1/6}]O₂, Na[Ni_{0.5}Fe_{0.5}]O₂, Na[Co_{0.5}Fe_{0.5}]O₂, Na[Ni_{1/3}Fe_{1/3}Mn_{1/3}]O₂, and Na[Cu_{1/9}Ni_{2/9}Fe_{1/3}Mn_{1/3}]O₂.

In some embodiments, the positive electrode film layer further optionally includes a positive electrode conductive agent. The type of the positive electrode conductive agent is not particularly limited in this application. For example, the positive electrode conductive agent may include one or more of superconducting carbon, conductive graphite, acetylene black, carbon black, Ketjen black, carbon dots, carbon nanotubes, graphene, and carbon nanofiber.

In some embodiments, the positive electrode film layer further optionally includes a positive electrode binder. The type of the positive electrode binder is not particularly limited in this application. For example, the positive electrode binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, fluorine-containing acrylate resin, styrene-butadiene rubber (SBR), water-soluble unsaturated resin SR-1B, water-based acrylic resin (for example, polyacrylic acid PAA, polymethacrylic acid PMAA, sodium polyacrylate PAAS), polyacrylamide (PAM), polyvinyl alcohol (PVA), sodium alginate (SA), or carboxymethyl chitosan (CMCS).

In some embodiments, the positive electrode current collector may be a metal foil or a composite current collector. As an example of a metal foil, an aluminum foil may be used. The composite current collector may include a polymer material substrate and a metal material layer formed on at least one surface of the polymer material substrate. For example, the metal material may include one or more of aluminum, aluminum alloy, nickel, nickel alloy, titanium, titanium alloy, silver, or silver alloy. For example, the polymer material substrate may include one or more of polypropylene (PP), polyethylene terephthalate (PET), polybutylene terephthalate (PBT), polystyrene (PS), and polyethylene (PE).

The positive electrode film layer is typically formed by applying a positive electrode slurry on the positive electrode current collector, followed by drying and cold pressing. The positive electrode slurry is typically formed by dispersing the positive electrode active material, an optional conductive agent, an optional binder, and any other components in a solvent and stirring them to uniformity. The solvent may be N-methylpyrrolidone (NMP), but is not limited thereto.

### [Negative electrode plate]

The battery cell includes a negative electrode plate. The structure and composition of the negative electrode plate may be selected according to the type of battery cell, which are not limited in the embodiments of this application.

In some embodiments, the negative electrode plate may include a negative electrode current collector and a negative electrode film layer disposed on at least one surface of the negative electrode current collector and including a negative electrode active material. For example, the negative electrode current collector has two opposite surfaces in its thickness direction, and the negative electrode film layer is disposed on either or both of the two opposite surfaces of the negative electrode current collector.

The negative electrode active material may be a material known in the art. For example, the negative electrode active material includes but is not limited to one or more of soft carbon, hard carbon, and mesocarbon microbeads.

In some embodiments, the negative electrode film layer further optionally includes a negative electrode conductive agent. The type of the negative electrode conductive agent is not particularly limited in this application. For example, the negative electrode conductive agent may include one or more of superconducting carbon, conductive graphite, acetylene black, carbon black, Ketjen black, carbon dots, carbon nanotubes, graphene, and carbon nanofiber.

In some embodiments, the negative electrode film layer further optionally includes a negative electrode binder. The type of the negative electrode binder is not particularly limited in this application. For example, the negative electrode binder may include one or more of styrene-butadiene rubber (SBR), water-soluble unsaturated resin SR-1B, water-based acrylic resin (for example, polyacrylic acid PAA, polymethacrylic acid PMAA, sodium polyacrylate PAAS), polyacrylamide (PAM), polyvinyl alcohol (PVA), sodium alginate (SA), or carboxymethyl chitosan (CMCS).

In some embodiments, the negative electrode film layer further optionally includes another additive. For example, the another additive may include a thickener, for example, sodium carboxymethyl cellulose (CMC), or a PTC thermistor material.

The negative electrode film layer is typically formed by applying a negative electrode slurry on the negative electrode current collector, followed by drying and cold pressing. The negative electrode slurry is typically formed by dispersing the negative electrode active material, an optional conductive agent, an optional binder, and other optional additives in a solvent and stirring them to uniformity. The solvent may be N-methylpyrrolidone (NMP) or deionized water, but is not limited thereto.

The negative electrode plate does not exclude other additional functional layers besides the negative electrode film layer. For example, in some embodiments, the negative electrode plate may further include a conductive primer layer (for example, including a conductive agent and a binder) disposed on the surface of the negative electrode current collector and sandwiched between the negative electrode current collector and the negative electrode film layer. In some embodiments, the negative electrode plate may further include a protective layer covering the surface of the negative electrode film layer.

In some embodiments, the negative electrode plate may include a negative electrode current collector and a metal layer disposed on at least one surface of the negative electrode current collector, where a metal material in the metal layer may include one or more of elemental sodium or sodium alloy.

The sodium alloy may be an alloy formed by metallic sodium with other metal elements or non-metal elements. For example, the other metal elements in the sodium alloy may include one or more elements of tin, zinc, aluminum, magnesium, silver, gold, gallium, indium, and platinum; and the non-metal elements in the sodium alloy may include one or more elements of boron, carbon, and silicon.

In some embodiments, the negative electrode plate may be a sodium sheet (foil) or a sodium alloy sheet (foil).

In some embodiments, the negative electrode plate may include only a negative electrode current collector to be assembled into an anode-free sodium-metal battery cell.

In some embodiments, the negative electrode current collector may include a metal foil, a three-dimensional porous current collector, or a composite current collector. As an example of the metal foil, a copper foil, a copper alloy foil, a nickel foil, a nickel alloy foil, an aluminum foil, or an aluminum alloy foil may be used. As an example of the three-dimensional porous current collector, copper mesh, nickel mesh, copper foam, nickel foam, or aluminum foam may be used. The composite current collector may include a polymer material substrate and a metal material layer formed on at least one surface of the polymer material substrate. For example, the metal material may include one or more of copper, copper alloy, nickel, nickel alloy, titanium, titanium alloy, aluminum, aluminum alloy, silver, and silver alloy. For example, the polymer material substrate may include one or more of polypropylene (PP), polyethylene terephthalate (PET), polybutylene terephthalate (PBT), polystyrene (PS), and polyethylene (PE).

### [Electrolyte]

The battery cell includes an electrolyte. The type of the electrolyte is not specifically limited in this application, which may be selected based on requirements. For example, the electrolyte may include one or more selected from a solid electrolyte and a liquid electrolyte (that is, an electrolyte solution).

In some embodiments, the electrolyte is a liquid electrolyte, and the liquid electrolyte includes an electrolytic salt and a solvent.

The type of the electrolytic salt is not specifically limited and may be selected based on actual requirements. In some embodiments, for example, the electrolytic salt may include one or more of NaPF₆, NaClO₄, NaBCl₄, NaSO₃CF₃, and Na(CH₃)C₆H₄SO₃.

The type of the solvent is not specifically limited and may be selected based on actual requirements. In some embodiments, the solvent may include one or more of an ester solvent, a sulfone solvent, and an ether solvent. For example, the solvent may include but is not limited to one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma butyrolactone (GBL), sulfolane (SF), methyl sulfonyl methane (MSM), ethyl methyl sulfone (EMS), and diethyl sulfone (ESE).

In some embodiments, the liquid electrolyte further optionally includes an additive. For example, the additive may include a negative electrode film-forming additive, or may include a positive electrode film-forming additive, or may include an additive capable of improving some performance of a battery, for example, an additive for improving overcharge performance of the battery, an additive for improving high-temperature performance of the battery, or an additive for improving low-temperature power performance of the battery.

### [Separator]

In battery cells using a liquid electrolyte and some battery cells using a solid electrolyte, a separator is also included. The separator is disposed between the positive electrode plate and the negative electrode plate, primarily to prevent internal short circuits.

The type of the separator is not particularly limited in this application, and any well-known porous separator with good chemical stability and mechanical stability may be used.

In some embodiments, the material of the separator may include one or more of glass fiber, non-woven fabric, polyethylene, polypropylene, and polyvinylidene fluoride. The separator may be a single-layer film or a multilayer composite film. When the separator is a multilayer composite film, the materials of the layers may be the same or different.

A preparation method of the battery cell is well-known. In some embodiments, the positive electrode plate, the separator, the negative electrode plate, and the electrolyte may be assembled to form a battery cell. For example, the positive electrode plate, the separator, and the negative electrode plate may be formed into an electrode assembly through a winding process and/or a stacking process; the electrode assembly is placed in an outer package, dried, and then injected with the above electrolyte, followed by processes such as sealing, standing, and formation to obtain a battery cell. A plurality of battery cells may further be connected in series, parallel, or series-parallel to form a battery module. A plurality of battery modules may further be connected in series, parallel, or series-parallel to form a battery pack. In some embodiments, a plurality of battery cells may alternatively be assembled directly into a battery pack.

### Electric apparatus

An embodiment of this application further provides an electric apparatus. The electric apparatus includes the battery provided by the embodiments of this application. The battery may be used as a power source for the electric apparatus or as an energy storage unit for the electric apparatus. The electric apparatus may be but is not limited to a mobile device (for example, a mobile phone, a tablet computer, or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, and an energy storage system.

The specific type of the battery, such as a battery cell, a battery module, or a battery pack, may be selected for the electric apparatus based on its usage requirements.

FIG. 6 is a schematic diagram of an electric apparatus as an example. The electric apparatus is a battery electric vehicle, a hybrid electric vehicle, or a plug-in hybrid electric vehicle, etc. To satisfy requirements of the electric apparatus for high power and high energy density, a battery pack or a battery module may be used.

For another example, the electric apparatus may be a mobile phone, a tablet computer, a notebook computer, or the like. Such electric apparatus is typically required to be light and thin and may use a battery cell as its power source.

### Examples

The following examples describe the content disclosed in this application in more detail, and these examples are provided solely for illustrative purposes, as various modifications and changes within the scope of the disclosure of this application will be apparent to persons skilled in the art. Unless otherwise stated, all parts, percentages, and ratios reported in the following examples are measured based on weight; all reagents used in the examples are commercially available or synthesized in a conventional manner, and can be used directly without further treatment; and all instruments used in the examples are commercially available.

### Comparative Example 1

Na₂CO₃, Mn₂O₃, Fe₂O₃, and NiO were weighed in a total amount of 30 g according to a molar ratio of Na:Mn:Fe:Ni = 1:0.4:0.3:0.3. The obtained sample was pre-ground in an agate mortar and then ball-milled in a planetary ball mill for 1 h to obtain a precursor mixture. The obtained precursor mixture was evenly placed in an open crucible, then heated in a muffle furnace from 25°C to 950°C at a heating velocity of 5°C/min, and held at 950°C for 15 h, where the atmosphere was air that was dehumidified and had carbon dioxide removed. After heating was completed, the resulting product was naturally cooled to obtain an unmodified NaNi_{0.3}Fe_{0.3}Mn_{0.4}O₂ layered transition metal oxide.

### Comparative Example 2

Na₂CO₃, Mn₂O₃, Fe₂O₃, and NiO were weighed in a total amount of 30 g according to a molar ratio of Na:Mn:Fe:Ni = 1:0.4:0.3:0.3, then KNO₃ was added (measured based on a mass of a K element being 0.44wt%). The obtained sample was pre-ground in an agate mortar and then ball-milled in a planetary ball mill for 1 h to obtain a precursor mixture. The obtained precursor mixture was evenly placed in an open crucible, then heated in a muffle furnace from 25°C to 950°C at a heating velocity of 5°C/min, and held at 950°C for 15 h, where the atmosphere was dehumidified and had carbon dioxide removed. After heating was completed, the resulting product was naturally cooled to obtain a NaNi_{0.3}Fe_{0.3}Mn_{0.4}O₂ layered transition metal oxide with uniformly doped K⁺.

### Comparative Example 3

10 g of a layered transition metal oxide was added to 10 mL of deionized water, stirred at 400 rpm at 25°C in a magnetic stirrer for 5 min, and then filtered. The solid obtained from filtration was placed in a vacuum oven and dried at 120°C for 12 h. The dried powder was placed in a muffle furnace, heated to 500°C at a heating velocity of 5°C/min, and held at 500°C for 5 h, where the atmosphere was air. After heating was completed, the resulting product was naturally cooled to obtain a positive electrode active material.

### Comparative Example 4

NaOH was prepared into an alkaline washing solution with a concentration of 1 mol/L, with deionized water as a solvent. According to a solid-liquid ratio of 1:1, 10 g of the unmodified NaNi_{0.3}Fe_{0.3}Mn_{0.4}O₂ layered transition metal oxide prepared in Comparative Example 1 and 10 mL of the alkaline washing solution were taken respectively. 10 g of the layered transition metal oxide was added to 10 mL of the alkaline washing solution, stirred at 400 rpm at 25°C in a magnetic stirrer for 5 min, and then filtered. The solid obtained from filtration was placed in a vacuum oven and dried at 120°C for 12 h. The dried powder was placed in a muffle furnace, heated to 500°C at a heating velocity of 5°C/min, and held at 500°C for 5 h, where the atmosphere was air. After heating was completed, the resulting product was naturally cooled to obtain a positive electrode active material.

### Example 1

(1) NaOH and KOH were prepared into an alkaline washing solution with a total concentration of 1 mol/L and a Na⁺/K⁺ molar ratio of 1:0.5, with deionized water as a solvent.
(2) According to a solid-liquid ratio of 1:1, 10 g of the unmodified NaNi_{0.3}Fe_{0.3}Mn_{0.4}O₂ layered transition metal oxide prepared in Comparative Example 1 and 10 mL of the alkaline washing solution were taken respectively. 10 g of the layered transition metal oxide was added to 10 mL of the alkaline washing solution, stirred at 400 rpm at 25°C in a magnetic stirrer for 5 min, and then filtered.
(3) The solid obtained from filtration was placed in a vacuum oven and dried at 120°C for 12 h.
(4) The dried powder was placed in a muffle furnace, heated to 500°C at a heating velocity of 5°C/min, and held at 500°C for 5 h, where the atmosphere was air.
(5) After heating was completed, the resulting product was naturally cooled to obtain a positive electrode active material doped with K⁺ on the surface.

### Example 2

Na₂CO₃, Mn₂O₃, Fe₂O₃, and NiO were weighed in a total amount of 30 g according to a molar ratio of Na:Mn:Fe:Ni = 1:0.4:0.3:0.3. The obtained sample was pre-ground in an agate mortar and then ball-milled in a planetary ball mill for 1 h to obtain a precursor mixture. The obtained precursor mixture was evenly placed in an open crucible, then heated in a muffle furnace from 25°C to 900°C at a heating velocity of 5°C/min, and held at 900°C for 15 h, where the atmosphere was air that was dehumidified and had carbon dioxide removed. After heating was completed, the resulting product was naturally cooled to obtain an unmodified NaNi_{0.3}Fe_{0.3}Mn_{0.4}O₂ layered transition metal oxide.

Then, the unmodified NaNi_{0.3}Fe_{0.3}Mn_{0.4}O₂ layered transition metal oxide was washed using the same process as in Example 1, and after washing was completed, a positive electrode active material doped with K⁺ on the surface was obtained.

### Example 3

Na₂CO₃, Mn₂O₃, Fe₂O₃, and NiO were weighed in a total amount of 30 g according to a molar ratio of Na:Mn:Fe:Ni = 1:0.4:0.3:0.3. The obtained sample was pre-ground in an agate mortar and then ball-milled in a planetary ball mill for 1 h to obtain a precursor mixture. The obtained precursor mixture was evenly placed in an open crucible, then heated in a muffle furnace from 25°C to 970°C at a heating velocity of 5°C/min, and held at 970°C for 20 h, where the atmosphere was air that was dehumidified and had carbon dioxide removed. After heating was completed, the resulting product was naturally cooled to obtain an unmodified NaNi_{0.3}Fe_{0.3}Mn_{0.4}O₂ layered transition metal oxide.

Then, the unmodified NaNi_{0.3}Fe_{0.3}Mn_{0.4}O₂ layered transition metal oxide was washed using the same process as in Example 1, and after washing was completed, a positive electrode active material doped with K⁺ on the surface was obtained.

### Example 4

Na₂CO₃ and a spherical precursor Ni_{0.3}Fe_{0.3}Mn_{0.4}(OH)₂ were weighed in a total amount of 30 g according to a molar ratio of 0.5:1. The obtained sample was mixed in a high-speed mixer for 1 h to obtain a precursor mixture. The obtained precursor mixture was evenly placed in an open crucible, then heated in a muffle furnace from 25°C to 900°C at a heating velocity of 5°C/min, and held at 900°C for 15 h, where the atmosphere was dehumidified and had carbon dioxide removed. After heating was completed, the resulting product was naturally cooled to obtain an unmodified NaNi_{0.3}Fe_{0.3}Mn_{0.4}O₂ layered transition metal oxide.

Then, the unmodified NaNi_{0.3}Fe_{0.3}Mn_{0.4}O₂ layered transition metal oxide was washed using the same process as in Example 1, and after washing was completed, a positive electrode active material doped with K⁺ on the surface was obtained.

### Example 5

The preparation process of the positive electrode active material was the same as in Example 1, except that in step (1), the alkaline washing solution was a 1 mol/L KOH solution.

### Examples 6 to 9

The preparation process of the positive electrode active material was the same as in Example 1, except that in step (1), the Na⁺/K⁺ molar ratio in the alkaline washing solution was different. Specific parameters were shown in Table 1.

### Examples 10 to 12

The preparation process of the positive electrode active material was the same as in Example 1, except that in step (2), the concentration and pH of the alkaline washing solution were different. Specific parameters were shown in Table 1.

### Examples 13 and 14

The preparation process of the positive electrode active material was the same as in Example 1, except that in step (2), the washing temperature was different. Specific parameters were shown in Table 1.

### Examples 15 to 17

The preparation process of the positive electrode active material was the same as in Example 1, except that in step (2), the washing duration was different. Specific parameters were shown in Table 1.

### Examples 18 to 21

The preparation process of the positive electrode active material was the same as in Example 1, except that in step (2), the sintering temperature was different. Specific parameters were shown in Table 1.

### Examples 22 to 25

The preparation process of the positive electrode active material was the same as in Example 1, except that in step (2), the sintering duration was different. Specific parameters were shown in Table 1.

### Tests

### (1) Test of amount of free alkaline substance on surface of positive electrode active material

20.000 g of the positive electrode active material prepared above was weighed, added to 100 mL of deionized water, stirred for 30 min, and then filtered; 60 mL of the resulting filtrate was pipetted into a 250 mL conical flask, and 10 drops of indicators (methyl orange and phenolphthalein) were added and shaken well. At this point, the solution appeared purple. Then, 0.1103 mol/L hydrochloric acid was used as a standard solution for titration, and an amount of a free alkaline substance (NaOH and Na₂CO₃) in the sample was calculated.

### (2) X-ray diffraction analysis test of positive electrode active material

The positive electrode active material prepared above was analyzed using an X-ray powder diffractometer. The test could be conducted under the following conditions: CuK_{α} ray was used as a radiation source, a radiation wavelength λ was 1.5406 Å, a scanning 20 angle range was 10° to 70°, and a scanning velocity was 4°/min; and a test instrument might be a Brucker D8A_A25 X-ray powder diffractometer from Brucker AxS, Germany.

A deconvoluted spectrum of an X-ray diffraction pattern of the positive electrode active material was obtained by refining the X-ray diffraction pattern of the positive electrode active material using Topas software with the Rietveld full-spectrum fitting method, where 20 from 16.0° to 16.7° corresponded to a peak position of a (003) crystal plane of the positive electrode active material.

The first peak with 20 between 16.0° and 16.3° represented the lattice-distorted O3 phase. The second peak with 2θ between 16.3° and 16.7° represented the main O3 phase. A ratio of a peak intensity of the first peak to a peak intensity of the second peak was a ratio of an integral area of the first peak to an integral area of the second peak.

The 2θ of a (104) crystal plane diffraction peak was between 41.5° and 42.5°, and the 2θ of a (015) crystal plane diffraction peak was between 44.5° and 45.5°. A ratio I₍₁₀₄₎:I₍₀₁₅₎ of a peak intensity I₍₁₀₄₎ of the (104) crystal plane diffraction peak to a peak intensity I₍₀₁₅₎ of the (015) crystal plane diffraction peak was a ratio of an integral area of the (104) crystal plane diffraction peak to an integral area of the (015) crystal plane diffraction peak.

### (3) Test of amounts of elements in positive electrode active material

The cross-section of the positive electrode active material was prepared using a cross-sectional polisher (for example, an IB-09010 CP argon ion cross-sectional polisher from JEOL, Japan), with a cross-sectional image passing through the center of a positive electrode active material particle, where the "particle center" referred to a range within a radius of 0.1 µm extending from the geometric center of the particle to the particle surface.

With reference to JY/T010-1996, the cross-section of the positive electrode active material was scanned using a scanning electron microscope (for example, a Sigma 300 scanning electron microscope from ZEISS, Germany); and subsequently, testing was performed using an inductively coupled plasma emission spectroscopy (ICP) to obtain the elemental composition of the positive electrode active material, and a molar amount x of the sodium element and a molar amount y of the potassium element were calculated.

The proportion of the mass of the K element in the surface region (a region formed by extending a distance of 0.05 L from the edge to the interior of a particle in the cross-sectional image, where L referred to the long-axis length of the positive electrode active material particle, that was, a maximum value of a line connecting two points on the particle surface that passed through the geometric center of the particle) of the obtained cross-sectional image of the positive electrode active material relative to a total mass of the K element in the obtained cross-sectional image of the positive electrode active material was taken as the proportion of the mass of the K element in the surface region of the positive electrode active material relative to the total mass of the K element in the positive electrode active material.

### (4) Test of first-cycle charge specific capacity and cycling performance

The positive electrode active material prepared above, a conductive agent carbon black Super P, and a binder polyvinylidene fluoride (PVDF) were mixed and ground well at a weight ratio of 80:15:5, an appropriate amount of solvent N-methylpyrrolidone (NMP) was added. The resulting mixture was stirred well to obtain a positive electrode slurry. The positive electrode slurry was uniformly applied on a positive electrode current collector aluminum foil, followed by drying, cold pressing, and cutting to obtain a positive electrode plate.

Ethylene carbonate (EC) and diethyl carbonate (DEC) were mixed in equal volumes to obtain an organic solvent, and then NaClO₄ was dissolved in the above organic solvent to prepare an electrolyte with a concentration of 1 mol/L.

The positive electrode plate prepared above, a separator (a polypropylene film with a thickness of 12 µm), and a sodium metal sheet were cut into appropriately sized discs and stacked in order, where the separator was located between the positive electrode plate and the sodium metal sheet to provide isolation; the electrolyte infiltrated at the separator, followed by pressing to obtain a button battery.

At 25°C, the button battery was charged to 4.2 V at a constant current with a current density of 10 mA/g to obtain a first-cycle charge capacity of the button battery, and then discharged to 1.5 V at a constant current with a current density of 10 mA/g to obtain a first-cycle discharge capacity of the button battery.

A first-cycle charge specific capacity (mAh/g) of the positive electrode active material = the first-cycle charge capacity of the button battery / the mass of the positive electrode active material.

At 25°C, the button battery was charged to 4.2 V at a constant current with a current density of 100 mA/g and then discharged to 1.5 V at a constant current with a current density of 100 mA/g to obtain a first-cycle discharge capacity of the button battery. The button battery was subjected to charge and discharge cycle test according to the above method, and a discharge capacity after each cycle was recorded. A capacity retention rate after 200 cycles of the button battery = a discharge capacity after 200 cycles of the button battery / the first-cycle discharge capacity of the button battery.

### (5) Test of Na⁺ diffusion coefficient

At 25°C, the button battery was charged to 4.2 V at a constant current of 0.1C and then discharged to 1.5 V at a constant current of 0.1C. Then, the button battery was charged to 4.2 V at a constant current of 1C and then charged to at a constant voltage until the current was less than or equal to 0.05C. After the button battery was left standing for 6 h, an electrochemical impedance spectroscopy (EIS) test was performed using an electrochemical workstation. Then, the impedances in a high-frequency region, medium-frequency region, and low-frequency region of the electrochemical impedance spectrum were fitted using a fitting software (for example, Zview) based on an equivalent circuit curve fitting method. The test frequency may be 100 kHz-0.01 Hz, a voltage amplitude might be set to 10 mV, and the electrochemical workstation might be a Zahner electrochemical workstation from Germany.

Based on the fitted electrochemical impedance spectrum and the formula *Z'* = *Rₛ + R_{ct}* + *σw*^{-1/2}, the Warburg (Warburg) coefficient σ (corresponding to the slope in the low-frequency region) could be obtained. R_{ct} represented the charge transfer resistance, and Rₛ represented the ohmic resistance.

The Na⁺ diffusion coefficient *D_{Na+} =* (*R²T²*)/(*2A²n⁴F⁴C²*σ*²*)*.* R was the gas constant, 8.314 J/(mol·K); T was 298 K; A was the area of the electrode plate, in cm²; n was the number of electrons transferred during the reaction; F was the Faraday constant, 96500 C/mol; C was a bulk concentration of sodium ions, in mol/cm³; and C = ρ/M, ρ was the density of the positive electrode film layer, in g/cm³, and M was the molar mass of the positive electrode active material, in g/mol.

A higher Na⁺ diffusion coefficient indicated a higher solid-phase diffusion velocity of sodium ions in the positive electrode active material and better rate performance.

The test results were shown in Table 2.

The positive electrode active material without any surface modification was prepared in Comparative Example 1. From the test results in Table 2, it can be seen that the surface of the positive electrode active material contains a high amount of free alkaline substance, and the positive electrode active material has a low capacity, a low sodium ion solid-phase diffusion velocity, and poor cycling stability, thereby affecting the energy density, cycling performance, and rate performance of the battery.

The positive electrode active material prepared in Comparative Example 2 was a positive electrode active material with uniformly doped K ions. From the test results in Table 2, it can be seen that after uniform doping of K ions in the bulk phase, the surface of the positive electrode active material still contains a high amount of free alkaline substance, and the positive electrode active material has a low capacity, a low sodium ion solid-phase diffusion velocity, and poor cycling stability, thereby affecting the energy density, cycling performance, and rate performance of the battery.

The positive electrode active material in Comparative Example 3 was obtained by washing the positive electrode active material in Comparative Example 1 with water. From the test results in Table 2, it can be seen that although the amount of the free alkaline substance on the surface of the positive electrode active material is reduced, the sodium amount of the positive electrode active material itself is significantly reduced (x significantly decreases), and the positive electrode active material has a low capacity, a low sodium ion solid-phase diffusion velocity, and poor cycling stability, thereby affecting the energy density, cycling performance, and rate performance of the battery.

From the test results of Examples 1 to 25 and Comparative Examples 1 and 3, it can be seen that washing with an alkaline washing solution containing K⁺ followed by sintering can obtain a positive electrode active material with a K element with an amount decreasing from the particle surface to the particle interior. From the test results in Table 2, it can be seen that the positive electrode active materials prepared in Examples 1 to 25 each have a low amount of free alkaline substance, a high capacity, a high sodium ion solid-phase diffusion velocity, and high cycling stability, thereby enabling the battery to have a high energy density as well as good cycling performance and rate performance.

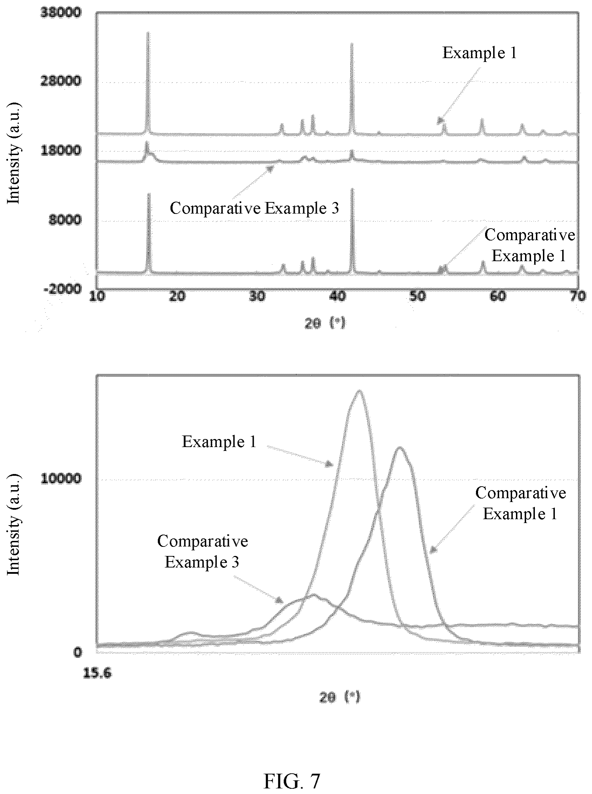

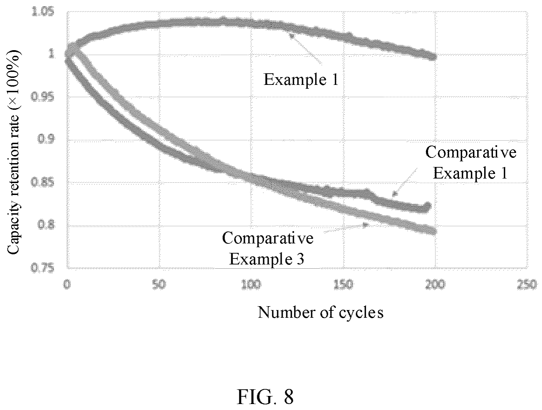

FIG. 7 shows X-ray diffraction patterns of positive electrode active materials prepared in Example 1, Comparative Example 1, and Comparative Example 3. FIG. 8 shows cycling curve graphs of button batteries prepared in Example 1, Comparative Example 1, and Comparative Example 3.

From FIG. 7, it can be seen that compared to the positive electrode active material prepared in Comparative Example 1, the (003) crystal plane diffraction peak of the positive electrode active material obtained by water washing in Comparative Example 3 significantly shifts to a lower angle, and the 2θ of the (003) crystal plane diffraction peak of the positive electrode active material after water washing is less than 16.3°, indicating that water washing causes damage to the layered structure of the positive electrode active material. Further combined with the test results in Table 2, it can be seen that the O3 phase of the washed positive electrode active material almost completely transforms into a lattice-distorted O3 phase. In Example 1, an alkaline washing solution containing K⁺ was used to wash and sinter the positive electrode active material prepared in Comparative Example 1. The resulting positive electrode active material, compared to the positive electrode active material in Comparative Example 1, shows a smaller shift of the (003) crystal plane diffraction peak to a lower angle, and the 20 of the (003) crystal plane diffraction peak of the washed positive electrode active material is greater than 16.3°, indicating that the O3 phase bulk structure of the washed positive electrode active material remains well preserved. Further combined with the test results in Table 2, it can be seen that the positive electrode active material prepared in Example 1 contains a small amount of lattice-distorted O3 phase.

From FIG. 7 and Table 2, it can also be seen that compared to the positive electrode active material prepared in Comparative Example 1, the (015) crystal plane diffraction peak of the positive electrode active material obtained by water washing in Comparative Example 3 is strengthened, the (104) crystal plane diffraction peak is weakened, and I₍₁₀₄₎/I₍₀₁₅₎ significantly decreases. In Example 1, an alkaline washing solution containing K⁺ was used to wash and sinter the positive electrode active material prepared in Comparative Example 1. The resulting positive electrode active material, compared to the positive electrode active material in Comparative Example 1, shows almost no change in the intensity and position of characteristic peaks in the X-ray diffraction pattern.

From FIG. 8, it can be seen that the positive electrode active material prepared in Example 1 has high cycling stability, which can improve the cycling performance of the battery.

The positive electrode active material in Comparative Example 4 was obtained by washing the positive electrode active material in Comparative Example 1 with an NaOH aqueous solution. From the test results in Table 2, it can be seen that although the amount of the free alkaline substance on the surface of the positive electrode active material is reduced, the crystal structure stability of the positive electrode active material is poor, making the crystal structure prone to irreversible transformation from a layered structure to a rock-salt phase structure, leading to poor cycling stability of the positive electrode active material during long-term charge-discharge processes of the battery, and a low solid-phase diffusion velocity of sodium ions in the positive electrode active material, thereby resulting in poor cycling performance and rate performance of the battery.

From the test results of Examples 1 to 4, it can also be seen that the positive electrode active materials have different particle morphologies and/or particle sizes. The positive electrode active materials obtained by the same washing and sintering processes have slightly different performance, and the obtained positive electrode active materials all have good performance.

From the test results of Examples 1 and 5 to 9, it can also be seen that when the alkaline washing solution contains both Na⁺ and K⁺, the performance of the positive electrode active material and the battery can be further improved.

From the test results of Examples 1 and 10 to 12, it can also be seen that further adjusting the pH of the alkaline washing solution can further improve the performance of the positive electrode active material and the battery.

From the test results of Examples 1 and 13 to 25, it can also be seen that further adjusting parameters such as the washing temperature, the washing duration, the sintering temperature, and the sintering duration can further improve the performance of the positive electrode active material and the battery.

From the test results of Examples 1 to 25, it can also be seen that further adjusting the proportion of the mass of the K element in the surface region of the positive electrode active material can further improve the performance of the positive electrode active material and the battery.

It should be noted that this application is not limited to the above embodiments. The above embodiments are merely examples, and embodiments having substantially the same technical idea and achieving the same effects within the scope of the technical solutions of this application are included in the technical scope of this application. In addition, without departing from the range of the essence of this application, various modifications made to the embodiments that can be conceived by persons skilled in the art, and other manners constructed by combining some of the constituent elements in the embodiments are also included in the scope of this application.

**Table 1**

| No. | Positive electrode active material | | Alkaline washing solution | | | Washing parameters | | Sintering parameters | | |
|---|---|---|---|---|---|---|---|---|---|---|
| | Particle morphology | Dᵥ50 (µm) | Solute | Concentration (mol/L) | pH | Temperature (°C) | Duration (min) | Temperature (°C) | Duration (h) | Atmosphere |
| Example 1 | Spherical single crystal | 8.5 | NaOH:KOH = 1:0.5 | 1 | 14 | 25 | 5 | 500 | 5 | Air |
| Example 2 | Spherical single crystal | 4.3 | NaOH:KOH = 1:0.5 | 1 | 14 | 25 | 5 | 500 | 5 | Air |
| Example 3 | Plate-like single crystal | 8.5 | NaOH:KOH = 1:0.5 | 1 | 14 | 25 | 5 | 500 | 5 | Air |
| Example 4 | Spherical polycrystal | 8.5 | NaOH:KOH = 1:0.5 | 1 | 14 | 25 | 5 | 500 | 5 | Air |
| Example 5 | Spherical single crystal | 8.5 | KOH | 1 | 14 | 25 | 5 | 500 | 5 | Air |
| Example 6 | Spherical single crystal | 8.5 | NaOH:KOH = 1:5 | 1 | 14 | 25 | 5 | 500 | 5 | Air |
| Example 7 | Spherical single crystal | 8.5 | NaOH:KOH = 1:2 | 1 | 14 | 25 | 5 | 500 | 5 | Air |
| Example 8 | Spherical single crystal | 8.5 | NaOH:KOH = 1:1 | 1 | 14 | 25 | 5 | 500 | 5 | Air |
| Example 9 | Spherical single crystal | 8.5 | NaOH:KOH = 1:0.2 | 1 | 14 | 25 | 5 | 500 | 5 | Air |
| Example 10 | Spherical single crystal | 8.5 | NaOH:KOH = 1:0.5 | 0.001 | 11 | 25 | 5 | 500 | 5 | Air |
| Example 11 | Spherical single crystal | 8.5 | NaOH:KOH = 1:0.5 | 0.01 | 12 | 25 | 5 | 500 | 5 | Air |
| Example 12 | Spherical single crystal | 8.5 | NaOH:KOH = 1:0.5 | 0.1 | 13 | 25 | 5 | 500 | 5 | Air |
| Example 13 | Spherical single crystal | 8.5 | NaOH:KOH = 1:0.5 | 1 | 14 | 35 | 5 | 500 | 5 | Air |
| Example 14 | Spherical single crystal | 8.5 | NaOH:KOH = 1:0.5 | 1 | 14 | 45 | 5 | 500 | 5 | Air |
| Example 15 | Spherical single crystal | 8.5 | NaOH:KOH = 1:0.5 | 1 | 14 | 25 | 10 | 500 | 5 | Air |
| Example 16 | Spherical single crystal | 8.5 | NaOH:KOH = 1:0.5 | 1 | 14 | 25 | 20 | 500 | 5 | Air |
| Example 17 | Spherical single crystal | 8.5 | NaOH:KOH = 1:0.5 | 1 | 14 | 25 | 60 | 500 | 5 | Air |
| Example 18 | Spherical single crystal | 8.5 | NaOH:KOH = 1:0.5 | 1 | 14 | 25 | 5 | 200 | 5 | Air |
| Example 19 | Spherical single crystal | 8.5 | NaOH:KOH = 1:0.5 | 1 | 14 | 25 | 5 | 300 | 5 | Air |
| Example 20 | Spherical single crystal | 8.5 | NaOH:KOH = 1:0.5 | 1 | 14 | 25 | 5 | 600 | 5 | Air |
| Example 21 | Spherical single crystal | 8.5 | NaOH:KOH = 1:0.5 | 1 | 14 | 25 | 5 | 700 | 5 | Air |
| Example 22 | Spherical single crystal | 8.5 | NaOH:KOH = 1:0.5 | 1 | 14 | 25 | 5 | 500 | 1 | Air |
| Example 23 | Spherical single crystal | 8.5 | NaOH:KOH = 1:0.5 | 1 | 14 | 25 | 5 | 500 | 3 | Air |
| Example 24 | Spherical single crystal | 8.5 | NaOH:KOH = 1:0.5 | 1 | 14 | 25 | 5 | 500 | 10 | Air |
| Example 25 | Spherical single crystal | 8.5 | NaOH:KOH = 1:0.5 | 1 | 14 | 25 | 5 | 500 | 20 | Air |
| Comparative Example 1 | Spherical single crystal | 8.5 | / | / | / | / | / | / | / | / |
| Comparative Example 2 | Spherical single crystal | 8.5 | / | / | / | / | / | / | / | / |
| Comparative Example 3 | Spherical single crystal | 8.5 | Water | / | 7 | 25 | 5 | / | / | / |
| Comparative Example 4 | Spherical single crystal | 8.5 | NaOH | 1 | 14 | 25 | 5 | 500 | 5 | Air |

**Table 2**

| No. | XRD test results of positive electrode active material | | | Molar amount x of Na | Molar amount y of K | Proportion of mass of K element in surface region to total mass of K element in positive electrode active material | Amount of free alkaline substance | First-cycle charge specific capacity (mAh/g) | Capacity retention rate after 200 cycles | Na⁺ diffusion coefficient (cm²/s) |
|---|---|---|---|---|---|---|---|---|---|---|
| | Shift of (003) crystal plane diffraction peak (°) | Ratio of peak intensity of first peak to peak intensity of second peak | I₍₁₀₄₎:I₍₀₁₅₎ | | | | | | | |
| Example 1 | 0.12 | 0.030:1 | 17.5:1 | 0.968 | 0.030 | 86% | 0.88% | 165.5 | 97.00% | 6.3×10⁻¹¹ |
| Example 2 | 0.17 | 0.041:1 | 15.5:1 | 0.950 | 0.021 | 90% | 1.26% | 170.4 | 94.30% | 8.2×10⁻¹¹ |
| Example 3 | 0.14 | 0.036:1 | 16.3:1 | 0.957 | 0.012 | 87% | 1.11% | 163.3 | 95.00% | 4.6×10⁻¹¹ |
| Example 4 | 0.18 | 0.046:1 | 15.0:1 | 0.947 | 0.035 | 87% | 1.40% | 163.9 | 93.30% | 4.8×10⁻¹¹ |
| Example 5 | 0.19 | 0.053:1 | 13.8:1 | 0.937 | 0.050 | 83% | 1.19% | 160.3 | 92.20% | 5.7×10⁻¹¹ |
| Example 6 | 0.18 | 0.047:1 | 15.0:1 | 0.948 | 0.045 | 85% | 1.11% | 162.1 | 93.40% | 5.1×10⁻¹¹ |
| Example 7 | 0.16 | 0.043:1 | 15.4:1 | 0.950 | 0.041 | 84% | 1.07% | 163.7 | 94.00% | 5.2×10⁻¹¹ |
| Example 8 | 0.14 | 0.039:1 | 16.0:1 | 0.958 | 0.036 | 85% | 1.01% | 164.0 | 95.60% | 5.6×10⁻¹¹ |
| Example 9 | 0.08 | 0.024:1 | 17.9:1 | 0.977 | 0.020 | 86% | 1.08% | 169.0 | 94.80% | 4.9×10⁻¹¹ |
| Example 10 | 0.19 | 0.062:1 | 13.4:1 | 0.932 | 0.008 | 89% | 1.10% | 159.0 | 88.90% | 8.5×10⁻¹² |
| Example 11 | 0.17 | 0.048:1 | 14.6:1 | 0.946 | 0.014 | 87% | 1.05% | 161.2 | 90.70% | 1.1×10⁻¹¹ |
| Example 12 | 0.16 | 0.036:1 | 15.7:1 | 0.954 | 0.019 | 86% | 0.98% | 163.3 | 92.30% | 3.1×10⁻¹¹ |
| Example 13 | 0.17 | 0.042:1 | 15.1:1 | 0.949 | 0.036 | 87% | 1.14% | 160.2 | 91.10% | 2.8×10⁻¹¹ |
| Example 14 | 0.18 | 0.069:1 | 12.4:1 | 0.921 | 0.047 | 86% | 1.17% | 158.9 | 89.00% | 9.4×10⁻¹² |
| Example 15 | 0.16 | 0.038:1 | 15.3:1 | 0.953 | 0.033 | 85% | 0.95% | 166.9 | 94.70% | 7.0×10⁻¹¹ |
| Example 16 | 0.17 | 0.045:1 | 14.3:1 | 0.941 | 0.041 | 84% | 0.82% | 167.8 | 93.20% | 7.5×10⁻¹¹ |
| Example 17 | 0.18 | 0.076:1 | 11.2:1 | 0.900 | 0.049 | 83% | 0.77% | 169.4 | 91.10% | 6.6×10⁻¹¹ |
| Example 18 | 0.20 | 0.029:1 | 17.2:1 | 0.967 | 0.030 | 95% | 1.18% | 158.8 | 89.00% | 2.3×10⁻¹¹ |
| Example 19 | 0.18 | 0.032:1 | 17.0:1 | 0.965 | 0.030 | 90% | 1.06% | 161.1 | 90.90% | 3.8×10⁻¹¹ |
| Example 20 | 0.17 | 0.036:1 | 16.4:1 | 0.960 | 0.029 | 84% | 0.90% | 167.5 | 93.80% | 2.8×10⁻¹¹ |
| Example 21 | 0.19 | 0.045:1 | 15.5:1 | 0.955 | 0.028 | 80% | 1.04% | 164.9 | 92.70% | 9.0×10⁻¹² |
| Example 22 | 0.20 | 0.031:1 | 17.7:1 | 0.966 | 0.029 | 92% | 1.22% | 160.6 | 91.20% | 9.2×10⁻¹² |
| Example 23 | 0.19 | 0.028:1 | 18.0:1 | 0.970 | 0.030 | 89% | 1.17% | 163.2 | 94.10% | 3.8×10⁻¹¹ |
| Example 24 | 0.19 | 0.032:1 | 18.1:1 | 0.971 | 0.029 | 70% | 1.15% | 161.7 | 92.30% | 4.0×10⁻¹¹ |
| Example 25 | 0.20 | 0.047:1 | 15.1:1 | 0.952 | 0.030 | 50% | 1.03% | 160.3 | 91.70% | 8.8×10⁻¹² |
| Comparative Example 1 | / | / | 20.0:1 | 0.989 | / | / | 3.86% | 155.4 | 82.00% | 1.4×10⁻¹³ |
| Comparative Example 2 | 0.14 | / | 19.0:1 | 0.976 | 0.030 | 12% | 4.09% | 158.6 | 88.00% | 6.7×10⁻¹² |
| Comparative Example 3 | 0.27 | 1:0 | 4.0:1 | 0.772 | / | / | 1.75% | 132.4 | 79.60% | 4.8×10⁻¹³ |
| Comparative Example 4 | 0.22 | 0.032:1 | 7.0:1 | 0.959 | / | / | 1.48% | 162.0 | 85.00% | 7.8×10⁻¹³ |

## Claims

1. A positive electrode active material, comprising a layered transition metal oxide represented by Formula (I):
NaₓK_{y}MₐA_{b}B_{c}OₘQₙ Formula (I),
wherein x > 0.5, 0 < y < 0.5, 0 < a ≤ 1, 0 ≤ b ≤ 1/3, 0 ≤ c ≤ 1/3, 1.9 ≤ m ≤ 2, and 0 ≤ n ≤ 0.1; M comprises one or more of Mn, Fe, Co, Ni, and Cu; A comprises one or more metal elements from Group IA, Group IIA, Group IIIA, Group IVA, Group VA, Group IIB, Group IVB, Group VB, and Group VIB; B comprises one or more non-metal elements from Group IIIA, Group IVA, Group VA, and Group VIA; and Q comprises one or more non-metal elements from Group VA and Group VIIA; and
the positive electrode active material comprises a K element, and an amount of the K element decreases from a particle surface to a particle interior of the positive electrode active material.

2. The positive electrode active material according to claim 1, wherein a region formed by extending a distance of 0.05 L from the particle surface to the particle interior of the positive electrode active material is denoted as a surface region of the positive electrode active material, wherein L refers to a long-axis length of a positive electrode active material particle, and a mass of the K element in the surface region of the positive electrode active material accounts for 50% to 95% of a total mass of the K element in the positive electrode active material, optionally 70% to 90%.

3. The positive electrode active material according to claim 1 or 2, wherein the positive electrode active material comprises one or more of an O3 phase, a P2 phase, and a P3 phase.

4. The positive electrode active material according to any one of claims 1 to 3, wherein the positive electrode active material comprises an O3 phase; and in a deconvoluted spectrum of an X-ray diffraction pattern of the positive electrode active material, two diffraction peaks exist within a 20 range of 16.0° to 16.7°, a diffraction peak with 20 between 16.0° and 16.3° is denoted as the first peak, a diffraction peak with 20 between 16.3° and 16.7° is denoted as the second peak, and a ratio of a peak intensity of the first peak to a peak intensity of the second peak is less than or equal to 0.1:1, optionally less than or equal to 0.076:1.

5. The positive electrode active material according to any one of claims 1 to 4, wherein the positive electrode active material comprises an O3 phase; and an X-ray diffraction pattern of the positive electrode active material comprises a (104) crystal plane diffraction peak with 20 between 41.5° and 42.5° and a (015) crystal plane diffraction peak with 20 between 44.5° and 45.5°, and a ratio of a peak intensity of the (104) crystal plane diffraction peak to a peak intensity of the (015) crystal plane diffraction peak is greater than 10:1.

6. The positive electrode active material according to any one of claims 1 to 5, wherein
A comprises one or more elements from Li, Ti, Zr, Sb, Nb, Mg, Ca, Mo, Zn, Cr, W, Bi, Sn, Ge, Al, Ba, Sr, and V; and/or
B comprises one or more elements from Si, P, B, S, and Se; and/or
Q comprises one or more elements from F, Cl, and N; and/or
x ≥ 2/3; and/or
0.012 ≤ y ≤ 0.05; and/or
0 ≤ b ≤ 1/3, 0 ≤ c ≤ 1/3, and 0 < b + c ≤ 1/3.

7. The positive electrode active material according to claim 6, wherein the positive electrode active material comprises a layered transition metal oxide represented by Formula (I-1):
NaₓK_{y}MnₚFe_{q}M'_{a-p-q}A_{b}B_{c}OₘQₙ Formula (I-1),
wherein 0 < p < 1, 0 < q < 1, a - p - q ≥ 0, and M comprises one or more elements from Co, Ni, and Cu;
optionally, 0 < p ≤ 2/3;
optionally, 0 < q ≤ 1/3; and
optionally, 0 < a - p - q ≤ 1/3.

8. The positive electrode active material according to any one of claims 1 to 7, wherein
an amount of a free alkaline substance on a surface of the positive electrode active material is 0.2wt%-20wt%, optionally 0.5wt%-1.4wt%; and/or
pH of the positive electrode active material is 11.5-13.5, optionally 11.8-12.6.

9. The positive electrode active material according to any one of claims 1 to 8, wherein
morphology of the positive electrode active material comprises one or more of a spherical single crystal, a plate-like single crystal, and a spherical polycrystal; and/or
a volume-based particle size Dᵥ50 of the positive electrode active material is 3-15 µm, optionally 4-9 µm.

10. A preparation method of a positive electrode active material, comprising the following steps:
providing an initial positive electrode active material, wherein the initial positive electrode active material comprises a sodium-containing layered transition metal oxide;
washing the initial positive electrode active material with an alkaline washing solution, wherein the alkaline washing solution comprises K⁺; and
after washing, performing drying to obtain a positive electrode active material, wherein the positive electrode active material comprises a layered transition metal oxide represented by Formula (I):
NaₓK_{y}MₐA_{b}B_{c}OₘQₙ Formula (I),
wherein x > 0.5, 0 < y < 0.5, 0 < a ≤ 1, 0 ≤ b ≤ 1/3, 0 ≤ c ≤ 1/3, 1.9 ≤ m ≤ 2, and 0 ≤ n ≤ 0.1; M comprises one or more of Mn, Fe, Co, Ni, and Cu; A comprises one or more metal elements from Group IA, Group IIA, Group IIIA, Group IVA, Group VA, Group IIB, Group IVB, Group VB, and Group VIB; B comprises one or more non-metal elements from Group IIIA, Group IVA, Group VA, and Group VIA; Q comprises one or more non-metal elements from Group VA and Group VIIA; and the positive electrode active material comprises a K element, and an amount of the K element decreases from a particle surface to a particle interior of the positive electrode active material.

11. The preparation method according to claim 10, wherein in the step of washing the initial positive electrode active material with an alkaline washing solution,
a washing temperature is less than or equal to 35°C, optionally 20°C-30°C; and/or
a washing duration is less than or equal to 60 min, optionally 5-20 min; and/or
pH of the alkaline washing solution is greater than or equal to 12, optionally 13-14.

12. The preparation method according to claim 10 or 11, wherein
a solute in the alkaline washing solution comprises one or more of potassium hydroxide, potassium carbonate, and potassium bicarbonate; and/or
the solvent in the alkaline washing solution comprises one or more of water, an alcohol solvent, and an ester solvent, optionally comprising water.

13. The preparation method according to any one of claims 10 to 12, wherein the alkaline washing solution further comprises Na⁺, and
optionally, a molar ratio of Na⁺ to K⁺ is 1:(0.1-10), optionally 1:(0.2-2).

14. The preparation method according to any one of claims 10 to 13, wherein the preparation method further comprises the following step: sintering the washed initial positive electrode active material, and obtaining a positive electrode active material after sintering; and
optionally, a sintering temperature is 300°C-600°C, optionally 450°C-550°C; and/or
optionally, a sintering duration is less than or equal to 10 h, optionally 3 h-8 h; and/or
optionally, a sintering atmosphere is an oxygen-containing atmosphere, and more optionally, a volume fraction of oxygen in the sintering atmosphere is 15%-40%.

15. A positive electrode plate, comprising a positive electrode current collector and a positive electrode film layer disposed on at least one surface of the positive electrode current collector, wherein the positive electrode film layer comprises the positive electrode active material according to any one of claims 1 to 9 or a positive electrode active material prepared by the preparation method according to any one of claims 10 to 14; and
optionally, based on a total weight of the positive electrode film layer, an amount of the positive electrode active material in the positive electrode film layer is 50wt% to 99wt%, more optionally 85wt% to 99wt%.

16. A battery, comprising the positive electrode plate according to claim 15.

17. An electric apparatus, comprising the battery according to claim 16.
